(19) Europäisches Patentamt
European Patent Office
Office européen des brevets

(11) EP 4 592 744 A1

(12) **EUROPEAN PATENT APPLICATION**
published in accordance with Art. 153(4) EPC

(43) Date of publication:
**30.07.2025 Bulletin 2025/31**

(21) Application number: **23868377.5**

(22) Date of filing: **31.07.2023**

(51) International Patent Classification (IPC):
***G02F 1/153*** *(2006.01)* ***G02F 1/155*** *(2006.01)*
***E06B 9/24*** *(2006.01)* ***B60J 3/04*** *(2006.01)*
***B32B 7/023*** *(2019.01)* ***B32B 37/00*** *(2006.01)*
***B60J 3/00*** *(2006.01)* ***G02F 1/15*** *(2019.01)*

(52) Cooperative Patent Classification (CPC):
**B32B 7/023; B32B 37/00; B60J 3/00; B60J 3/04; E06B 9/24; G02F 1/15; G02F 1/153; G02F 1/155**

(86) International application number:
**PCT/KR2023/011178**

(87) International publication number:
**WO 2024/063317 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2022 KR 20220119718**
**14.12.2022 KR 20220174698**

(71) Applicant: **SKC Co., Ltd.**
**Suwon-si, Gyeonggi-do 16338 (KR)**

(72) Inventors:
- **KIM, Su Woo**
  **Suwon-si Gyeonggi-do 16338 (KR)**
- **LEE, Seong Hwan**
  **Suwon-si Gyeonggi-do 16338 (KR)**
- **LA, Yong Sang**
  **Suwon-si Gyeonggi-do 16338 (KR)**
- **OH, Seung Bae**
  **Suwon-si Gyeonggi-do 16338 (KR)**
- **AHN, Byeong Uk**
  **Suwon-si Gyeonggi-do 16338 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **ELECTROCHROMIC DEVICE, MANUFACTURING METHOD THEREFOR, AND WINDOW DEVICE INCLUDING SAME**

(57) An embodiment provides a method for manufacturing an electrochromic device, the method comprising the steps of: preparing a first laminate; arranging a second laminate on the first laminate; and laminating the first and second laminates, wherein the first laminate comprises a first substrate; a first transparent electrode arranged on the first substrate; a first electrochromic layer arranged on the first transparent electrode; and an electrolyte composition layer arranged on the first electrochromic layer and containing a curable resin composition, a solvent, and a metal salt, and the second laminate comprises a second electrochromic layer arranged on the electrolyte composition layer and a second substrate arranged on the second electrochromic layer, the first laminate having a transmittance reduction of 5 % or less after 90 days as measured by the following measurement method.

【FIG. 1】

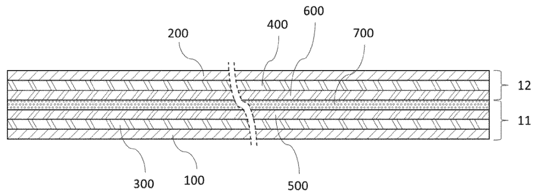


EP 4 592 744 A1

## Description

[Technical Field]

Embodiments relate to an electrochromic element, a method of fabricating the same and a window device including the same.

[Background Art]

Electrochromic films, whose colors change due to coloring and discoloring through oxidation-reduction reactions at each oxidation electrode and reduction electrode depending on an applied potential, can be artificially controlled by a user to emit visible light and infrared rays, and various types of inorganic oxides are used as electrode materials.

Electrochromic films as described above have been developed in various ways and patent-applied. As examples of related patent applications, there are Korea Patent Application Publication No. 10-2001-0087586, which discloses a film that changes from transparent to blue by depositing $MoO_3$, a reduced chromogenic oxide, on one of two ITO films (1A, 1B) formed by depositing a conductive Indium-tin oxide thin film on a glass film, and depositing $WO_3$, also a reduced chromogenic material, is deposited on the other ITO film, and then depositing a solid electrolyte of lithium, an alkali metal, on the deposited ITO film, and then injecting polyaniline, a conductive polymer, between the two films, and then allowing passing through a high-frequency compression roller to apply voltage, and Korea Utility Model Publication No. 0184841 which discloses a film, whose color changes by electric energy, characterized by depositing indium-tin oxide on a 0.05 mm thick glass film, and then depositing opposite surfaces of the transition metal oxide film with $WO_3$, a reduced chromogenic material, and $IrO_2$, an oxidized chromogenic material, with a polymer solid electrolyte, $\alpha$-PEO copolymer, therebetween, and then bonding the opposite surfaces with a high-frequency roller.

[Disclosure]

[Technical Problem]

Therefore, the present invention has been made in view of the above problems, and it is one object of the present invention to provide a method of easily fabricating an electrochromic element having high thickness uniformity, improved mechanical strength, improved peel strength, excellent appearance, less electrolyte leakage, and improved durability against mechanical deformation; and a laminate having improved long-term reliability.

It is another object of the present invention to provide an electrochromic element having improved optical properties, a method of fabricating the same and a window device including the electrochromic element.

[Technical Solution]

In accordance with an aspect of the present invention, the above and other objects can be accomplished by the provision of a method of fabricating an electrochromic element, the method including: preparing a first laminate; disposing a second laminate on the first laminate; and laminating the first laminate and the second laminate, wherein the first laminate includes: a first substrate; a first transparent electrode disposed on the first substrate; a first discoloration layer disposed on the first transparent electrode; and an electrolyte composition layer that is disposed on the first discoloration layer and includes a curable resin composition, a solvent and a metal salt, wherein the second laminate includes: a second discoloration layer disposed on the electrolyte composition layer; and a second substrate disposed on the second discoloration layer, wherein, in the first laminate, a decrease in transmittance after 90 days measured by Measurement Method 1 below is 5% or less:

[Measurement Method 1]

the transmittance decrease is a difference between an initial transmittance of the first laminate and a transmittance of the laminate after 90 days when a protective layer is disposed on the first laminate and is left at room temperature and a relative humidity of 60% for 90 days.

In an embodiment, the laminating of the first laminate and the second laminate may include curing the electrolyte composition layer.

In an embodiment, the electrolyte composition layer may be in an uncured or semi-cured state.

In an embodiment, the first laminate may be stored or transported for 60 days or more in a state where the protective layer is disposed on the electrolyte composition layer, and the first laminate may be laminated on the second laminate in a state where the protective layer is removed.

In accordance with another aspect of the present invention, provided is a laminate for laminating an electrochromic element, the laminate including: a first substrate; a first transparent electrode disposed on the first substrate; a first discoloration layer disposed on the first transparent electrode; and an electrolyte composition layer that is disposed on the first discoloration layer and includes a curable resin composition, a solvent and a metal salt, wherein a decrease in transmittance after 90 days measured by Measurement Method 2 below is 5% or less:.

[Measurement Method 2]

when the laminate is left at room temperature and a relative humidity of 60% for 90 days in a protective layer is disposed on the electrolyte composition layer, the transmittance decrease is a difference between an initial transmittance of the laminate and a transmittance of the laminate after 90 days.

In the laminate for manufacturing the electrochromic element according to an embodiment, a haze increase after 90 days measured by Measurement Method 3 below is less than 5%:

[Measurement Method 3]

when the laminate is left at room temperature and 60% relative humidity for 90 days in a state where the protective layer is disposed on the electrolyte composition layer, the haze increase is a difference between a haze of the laminate after 90 days and an initial haze of the laminate.

In the laminate for manufacturing the electrochromic element according to an embodiment, a transmittance deviation after 90 days measured by Measurement Method 4 below is less than 0.2:

[Measurement Method 4]

in a state where the protective layer is disposed on the electrolyte composition layer, a transmittance in each of measurement regions of the laminate is measured after the laminate is left at room temperature and 60% relative humidity for 90 days, and the transmittance deviation is a value obtained by dividing a difference between a maximum transmittance of the measurement regions and a minimum transmittance thereof by an average transmittance.

In an embodiment, the electrolyte composition layer may be in an uncured or semi-cured state.

In an embodiment, the curable resin composition may include a photo-curable polymer having a thermosetting functional group.

In accordance with another aspect of the present invention, provided is an electrochromic element, including: a first laminate; and a second laminate laminated on the first laminate, wherein the first laminate includes: a first substrate; a first transparent electrode disposed on the first substrate; a first discoloration layer disposed on the first transparent electrode; and an electrolyte layer disposed on the first discoloration layer, the second laminate includes: a second discoloration layer disposed on the electrolyte layer; a second transparent electrode disposed on the second discoloration layer; and a second substrate disposed on the second transparent electrode, the electrolyte layer includes a curable resin composition, a solvent and a metal salt, the second laminate is laminated on the electrolyte layer, and in the first laminate, a decrease in transmittance after 90 days measured by Measurement Method 5 below is 5% or less:

[Measurement Method 5]

when the first laminate is left at room temperature and a relative humidity of 60% for 90 days in a state where a protective layer is disposed on the electrolyte layer, the transmittance decrease is a difference between an initial transmittance of the first laminate and a transmittance of the first laminate after 90 days.

In the electrochromic element according to an embodiment, a driving range deviation measured by Measurement Method 6 below may be less than 0.2:

[Measurement Method 6]

in measurement regions of the electrochromic element, a transmittance when discolored, and a transmittance when colored are measured, a driving range in the measurement regions is a difference between the transmittance when discolored and the transmittance when colored, and the driving range deviation is obtained by dividing a difference between a maximum driving range and minimum driving range in the measurement regions by an average driving range.

In accordance with still another aspect of the present invention, provided is a window device, including: a frame; a window mounted on the frame; and an electrochromic element disposed in the window, wherein the electrochromic element includes: a first laminate; and a second laminate laminated on the first laminate, wherein the first laminate includes: a first substrate; a first transparent electrode disposed on the first substrate; a first discoloration layer disposed on

the first transparent electrode; and an electrolyte layer disposed on the first discoloration layer, the second laminate includes: a second discoloration layer disposed on the electrolyte layer; a second transparent electrode disposed on the second discoloration layer; and a second substrate disposed on the second transparent electrode, wherein the electrolyte layer includes a curable resin composition, a solvent and a metal salt, the second laminate is laminated on the electrolyte layer, and in the first laminate, a decrease in transmittance after 90 days measured by Measurement Method 1 below is 5% or less:

[Measurement Method 1]

when the first laminate is left at room temperature and a relative humidity of 60% for 90 days in a state where a protective layer is disposed on the electrolyte layer, the transmittance decrease is a difference between an initial transmittance of the first laminate and a transmittance of the first laminate after 90 days.

In accordance with still another aspect of the present invention, provided is a method of fabricating an electrochromic element, the method including: preparing a first laminate; disposing a second laminate on the first laminate; and laminating the first laminate and the second laminate, wherein the first laminate includes: a first substrate; a first transparent electrode disposed on the first substrate; a first discoloration layer disposed on the first transparent electrode; and an electrolyte composition layer that is disposed on the first discoloration layer and includes a curable resin composition, a solvent and a metal salt, wherein the second laminate includes: a second discoloration layer disposed on the electrolyte composition layer; and a second substrate disposed on the second discoloration layer, wherein a haze decrease is greater than 0, and a haze decrease is a value obtained by subtracting a third haze of the entire layers from the sum of a first haze of the first laminate and a second haze of the second laminate when the first laminate and the second laminate are laminated.

In an embodiment, the laminating of the first laminate and the second laminate may include curing the electrolyte composition layer.

In an embodiment, the electrolyte composition layer may be in an uncured or semi-cured state.

In an embodiment, the haze decrease may be 0.001% to 3%.

In accordance with still another aspect of the present invention, provided is an electrochromic element, including: a first laminate; and a second laminate laminated on the first laminate, wherein the first laminate includes: a first substrate; a first transparent electrode disposed on the first substrate; a first discoloration layer disposed on the first transparent electrode; and an electrolyte layer disposed on the first discoloration layer, the second laminate includes: a second discoloration layer disposed on the electrolyte layer; a second transparent electrode disposed on the second discoloration layer; and a second substrate disposed on the second transparent electrode, the electrolyte layer includes a curable resin composition, a solvent and a metal salt, the second laminate is laminated on the electrolyte layer, wherein a haze decrease is greater than 0, and a haze increase is a value obtained by subtracting a third haze of the entire layers from the sum of a first haze of the first laminate and a second haze of the second laminate when the first laminate and the second laminate are laminated.

In an embodiment, the first haze may be 0.1% to 2%, the second haze may be 0.1% to 2%, and the third haze may be 0.199% to 3.999%.

In an embodiment, the haze decrease may be 0.001% to 3%.

In an embodiment, the photocurable resin composition may include urethane acrylate or epoxy acrylate, and the thickness of the electrolyte layer may be 10 μm to 200 μm.

In an embodiment, the urethane acrylate may have a viscosity of 10000 cPs to 100000 cPs at 25°C, and the epoxy acrylate may have a viscosity of 100 cPs to 5000 cPs at 25°C.

In accordance with yet another aspect of the present invention, provided is a window device, including: a frame; a window mounted on the frame; and an electrochromic element disposed in the window, wherein the electrochromic element includes: a first laminate; and a second laminate laminated on the first laminate, wherein the first laminate includes: a first substrate; a first transparent electrode disposed on the first substrate; a first discoloration layer disposed on the first transparent electrode; and an electrolyte layer disposed on the first discoloration layer, the second laminate includes: a second discoloration layer disposed on the electrolyte layer; a second transparent electrode disposed on the second discoloration layer; and a second substrate disposed on the second transparent electrode, wherein the electrolyte layer includes a curable resin composition, a solvent and a metal salt, the second laminate is laminated on the electrolyte layer, and in the electrochromic element, a haze decrease is greater than 0, and a haze increase is a value obtained by subtracting a third haze of the entire layers from the sum of a first haze of the first laminate and a second haze of the second laminate when the first laminate and the second laminate are laminated.

[Advantageous effects]

A method of fabricating an electrochromic element according to an embodiment includes a step of preparing a

first laminate. The first laminate includes a first substrate, a first transparent electrode disposed on the first substrate, a first discoloration layer disposed on the first transparent electrode, and an electrolyte composition layer that is disposed on the first discoloration layer and includes a curable resin composition, a solvent and a metal salt, wherein a decrease in transmittance of the first laminate after 90 days is less than 5%.

In addition, a haze increase in the first laminate after 90 days can be less than 5%. In addition, a deviation in the transmittance of the first laminate after 90 days can be less than 0.2.

Accordingly, since the first laminate maintains its performance even when stored for a long time, the method of fabricating the electrochromic element according to an embodiment can provide an electrochromic element having improved optical properties.

In addition, since the first laminate maintains its performance even when stored for a long time, the method of fabricating the electrochromic element according to an embodiment can provide an electrochromic element having improved performance even if the transportation period of the first laminate and the second laminate takes a long time after the first laminate and the second laminate are manufactured.

Accordingly, the method of fabricating the electrochromic element according to an embodiment can provide an electrochromic element having improved performance even if the first laminate and the second laminate are manufactured separately at different times and/or spaces.

Accordingly, the method of fabricating the electrochromic element according to an embodiment can easily manufacture an electrochromic element having improved performance at a low cost.

In an embodiment, since the first laminate and the second laminate are transported in a semi-finished state, the first laminate and the second laminate can be easily wound and transported.

Accordingly, the method of fabricating the electrochromic element according to an embodiment can be an efficient and easy method.

In the method of fabricating the electrochromic element according to an embodiment, a decrease in the haze is greater than 0. Accordingly, the electrochromic element according to an embodiment can reduce, rather than increase, the overall haze in the lamination process of the first laminate and the second laminate.

The method of fabricating the electrochromic element according to an embodiment can appropriately adjust the composition and properties of the electrolyte layer, thereby reducing the hazes of the first discoloration layer and/or the second discoloration layer.

Accordingly, the electrochromic element according to an embodiment can have a low haze.

In particular, when the first discoloration layer and the second discoloration layer have high color change characteristics, they can have a high haze. That is, the first discoloration layer and the second discoloration layer can have low optical properties when implementing improved color change characteristics.

Since the electrochromic element according to an embodiment has an appropriate haze described above, it can have improved optical properties while having improved color change characteristics.

[Description of Drawings]

FIG. 1 is a sectional view illustrating the cross-section of an electrochromic element according to an embodiment.

FIGS. 2 to 5 are drawings illustrating a process of fabricating are drawings illustrating a process of fabricating the electrochromic element according to an embodiment.

FIGS. 6 to 9 are drawings illustrating a process of fabricating an electrochromic element according to another embodiment.

FIG. 10 is a sectional view illustrating one cross-section of an electrochromic element according to still another embodiment.

FIGS. 11 to 14 are drawings illustrating a process of fabricating the electrochromic element according to still another embodiment.

FIGS. 15 to 18 are drawings illustrating a process of fabricating an electrochromic element according to yet another embodiment.

FIG. 19 illustrates a window device including the electrochromic element according to an embodiment.

[Best Model

In the description of embodiments, it will be understood that when each part, surface, layer or substrate is referred to as being "on" or "under" another part, surface, layer or substrate, the part, surface, layer or substrate can be directly on another part, surface, layer or substrate or intervening part, surface, layer or substrate, and criteria for "on" and "under" will be provided based on the drawings. Elements in the following drawings may be exaggerated, omitted, or schematically

illustrated for convenience and clarity of explanation, and the sizes of elements do not reflect their actual sizes completely.

FIG. 1 is a sectional view illustrating the cross-section of an electrochromic element according to an embodiment.

Referring to FIG. 1, the electrochromic element according to an embodiment includes a first laminate 11 and a second laminate 12. The second laminate 12 is disposed on the first laminate 11. The second laminate 12 is laminated on the first laminate 11.

The first laminate 11 includes a first substrate 100, a first transparent electrode 300, a first discoloration layer 500 and an electrolyte layer 700. The second laminate 12 includes a second substrate 200, a second transparent electrode 400 and a second discoloration layer 600.

Together with the second substrate 200, the first substrate 100 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the first substrate 100 and the second substrate 200. Together with the second substrate 200, the first substrate 100 may protect the first transparent electrode 300, the first discoloration layer 500, the second discoloration layer 600, the second transparent electrode 400 and the electrolyte layer 700 from external physical impact and chemical impact.

The first substrate 100 may include a polymer resin. The first substrate 100 may include at least one selected from the group consisting of a polyester-based resin, a polyimide-based resin, a cyclic olefin polymer resin, a polyethersulfone, a polycarbonate and a polyolefin-based resin.

The first substrate 100 may include a polyester resin as a main component. The first substrate 100 may include polyethylene terephthalate. The first substrate 100 may include the polyethylene terephthalate in a content of about 90 wt% or more based on the total composition amount. The first substrate 100 may include the polyethylene terephthalate in a content of about 95 wt% or more based on the total composition amount. The first substrate 100 may include the polyethylene terephthalate in a content of about 97 wt% or more based on the total composition amount. The first substrate 100 may include the polyethylene terephthalate in a content of about 98 wt% or more based on the total composition amount.

The first substrate 100 may include a uniaxially or biaxially stretched polyethylene terephthalate film. The first substrate 100 may include a polyethylene terephthalate film stretched about 2 to about 5 times in a longitudinal direction and/or width direction.

The first substrate 100 may have high mechanical properties to reinforce glass when applied to a window of a building or a vehicle.

The first substrate 100 may have a tensile strength of about 7 $kgf/mm^2$ to about 40 $kgf/mm^2$ in the longitudinal direction. The first substrate 100 may have a tensile strength of about 8 $kgf/mm^2$ to about 35 $kgf/mm^2$ in the longitudinal direction.

The first substrate 100 may have a tensile strength of about 7 $kgf/mm^2$ to about 40 $kgf/mm^2$ in the width direction. The first substrate 100 may have a tensile strength of about 8 $kgf/mm^2$ to about 35 $kgf/mm^2$ in the width direction.

The first substrate 100 may have a modulus of about 200 $kgf/mm^2$ to about 400 $kgf/mm^2$ in the longitudinal direction. The first substrate 100 may have a modulus of about 250 $kgf/mm^2$ to about 350 $kgf/mm^2$ in the longitudinal direction. The first substrate 100 may have a modulus of about 250 $kgf/mm^2$ to about 270 $kgf/mm^2$ in the longitudinal direction.

The first substrate 100 may have a modulus of about 200 $kgf/mm^2$ to about 400 $kgf/mm^2$ in the width direction. The first substrate 100 may have a modulus of about 250 $kgf/mm^2$ to about 350 $kgf/mm^2$ in the width direction. The first substrate 100 may have a modulus of about 250 $kgf/mm^2$ to about 270 $kgf/mm^2$ in the width direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The first substrate 100 may have a fracture elongation of about 30% to about 150% in the longitudinal direction. The first substrate 100 may have a fracture elongation of about 30% to about 130% in the longitudinal direction. The first substrate 100 may have a fracture elongation of about 40% to about 120% in the longitudinal direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The modulus, the fracture elongation and the tensile strength may be measured according to KS B 5521.

In addition, the modulus, the tensile strength and the fracture elongation may be measured according to ASTM D882.

Since the first substrate 100 has improved mechanical strength as described above, it may efficiently protect the first transparent electrode 300, the second transparent electrode 400, the first discoloration layer 500, the second discoloration layer 600 and the electrolyte layer 700. In addition, since the first substrate 100 has improved mechanical

strength as described above, the mechanical strength of the mechanical strength of glass to be attached may be effectively reinforced.

The first substrate 100 may include glass. The first substrate 100 may be a glass substrate.

In addition, the first substrate 100 may have high chemical resistance. Accordingly, even if an electrolyte contained in the first substrate 100 leaks, damage to the surface of the first substrate 100 may be minimized.

The first substrate 100 may have improved optical properties. A total light transmittance of the first substrate 100 may be about 55% or more. The total light transmittance of the first substrate 100 may be about 70% or more. The total light transmittance of the first substrate 100 may be about 75% to about 99%. The total light transmittance of the first substrate 100 may be about 80% to about 99%.

A haze of the first substrate 100 may be about 20% or less. The haze of the first substrate 100 may be about 0.1% to about 20%. The haze of the first substrate 100 may be about 0.1% to about 10%. The haze of the first substrate 100 may be about 0.1% to about 7%.

The total light transmittance and the haze may be measured according to ASTM D 1003, etc.

Since the first substrate 100 has an appropriate total light transmittance and haze, the electrochromic element according to another embodiment may have improved optical properties. That is, since the first substrate 100 has an appropriate transmittance and haze, an improved appearance may be achieved by minimizing distortion of images from the outside while appropriately controlling a transmittance when the electrochromic element according to another embodiment is applied to a window.

In addition, the first substrate 100 may have an in-plane phase difference of about 100 nm to about 4000 nm. The first substrate 100 may have an in-plane phase difference of about 200 nm to about 3500 nm. The first substrate 100 may have an in-plane phase difference of about 200 nm to about 3000 nm.

The first substrate 100 may have an in-plane phase difference of about 7000 nm or more. The first substrate 100 may have an in-plane phase difference of about 7000 nm to about 50000 nm. The first substrate 100 may have an in-plane phase difference of about 8000 nm to about 20000 nm.

The in-plane phase difference may be derived from a refractive index and thickness according to the direction of the first substrate 100.

Since the first substrate 100 has the in-plane phase difference as described above, the electrochromic film according to an embodiment may have an improved appearance.

The thickness of the first substrate 100 may be about 10 μm to about 200 μm. The thickness of the first substrate 100 may be about 23 μm to about 150 μm. The thickness of the first substrate 100 may be about 30 μm to about 120 μm.

The first substrate 100 may include an organic filler or an inorganic filler. The organic or inorganic filler may function as an anti-blocking agent.

An average particle diameter of the filler may be about 0.1 μm to about 5 μm. The average particle diameter of the filler may be about 0.1 μm to about 3 μm. The average particle diameter of the filler may be about 0.1 μm to about 1 μm.

The filler may be at least one selected from the group consisting of silica particles, barium sulfate particles, alumina particles and titania particles.

In addition, the filler may be included in the first substrate 100 in a content of about 0.01 wt% to about 3 wt% based on the total amount of the first substrate 100. The filler may be included in the first substrate 100 in a content of about 0.05 wt% to about 2 wt% based on the total amount of the first substrate 100.

The first substrate 100 may have a single-layer structure. For example, the first substrate 100 may be a single-layer polyester film.

The first substrate 100 may have a multi-layer structure. For example, the first substrate 100 may be a multi-layer co-extruded film. The multi-layer co-extruded structure may include a center layer, a first surface layer and a second surface layer. The filler may be included in the first surface layer and the second surface layer.

The second substrate 200 faces the first substrate 100. The second substrate 200 is disposed on the first substrate 100. One end of the second substrate 200 may be disposed to be misaligned with one end of the first substrate 100. The other end of the second substrate 200 may be disposed to be misaligned with the other end of the first substrate 100.

Together with the first substrate 100, the second substrate 200 supports the first transparent electrode 300, the first discoloration layer 500, the second discoloration layer 600, the second transparent electrode 400, and the electrolyte layer 700.

In addition, the first transparent electrode 300, the first discoloration layer 500, the second discoloration layer 600, the second transparent electrode 400, and the electrolyte layer 700 are sandwiched between the second substrate 200 and the first substrate 100. Together with the first substrate 100, the second substrate 200 may protect the first transparent electrode 300, the first discoloration layer 500, the second discoloration layer 600, the second transparent electrode 400, and the electrolyte layer 700 from external physical impact and chemical impact.

The second substrate 200 may include a polymer resin. The second substrate 200 may include at least one selected from the group consisting of a polyester-based resin, a polyimide-based resin, a cyclic olefin polymer resin, a

polyethersulfone, a polycarbonate or a polyolefin-based resin.

The second substrate 200 may include a polyester resin as a main component. The second substrate 200 may include polyethylene terephthalate. The second substrate 200 may include the polyethylene terephthalate in a content of about 90 wt% or more based on the total composition amount. The second substrate 200 may include the polyethylene terephthalate in a content of about 95 wt% or more based on the total composition amount. The second substrate 200 may include the polyethylene terephthalate in a content of about 97 wt% or more based on the total composition amount. The second substrate 200 may include the polyethylene terephthalate in a content of about 98 wt% or more based on the total composition amount.

The second substrate 200 may include a uniaxially or biaxially stretched polyethylene terephthalate film. The second substrate 200 may include a polyethylene terephthalate film stretched about 2 to about 5 times in a longitudinal direction and/or width direction.

The second substrate 200 may have high mechanical properties to reinforce the glass when applied to a window of a building or a vehicle.

The second substrate 200 may have a tensile strength of about 7 $kgf/mm^2$ to about 40 $kgf/mm^2$ in the length direction. The second substrate 200 may have a tensile strength of about 8 $kgf/mm^2$ to about 35 $kgf/mm^2$ in the length direction.

The second substrate 200 may have a tensile strength of about 7 $kgf/mm^2$ to about 40 $kgf/mm^2$ in the width direction. The second substrate 200 may have a tensile strength of about 8 $kgf/mm^2$ to about 35 $kgf/mm^2$ in the width direction.

The second substrate 200 may have a modulus of about 200 $kgf/mm^2$ to about 400 $kgf/mm^2$ in the length direction. The second substrate 200 may have a modulus of about 250 $kgf/mm^2$ to about 350 $kgf/mm^2$ in the length direction. The second substrate 200 may have a modulus of about 250 $kgf/mm^2$ to about 270 $kgf/mm^2$ in the length direction.

The second substrate 200 may have a modulus of about 200 $kgf/mm^2$ to about 400 $kgf/mm^2$ in the width direction. The second substrate 200 may have a modulus of about 250 $kgf/mm^2$ to about 350 $kgf/mm^2$ in the width direction. The second substrate 200 may have a modulus of about 250 $kgf/mm^2$ to about 270 $kgf/mm^2$ in the width direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the width direction. The second substrate 200 may have a fracture elongation of about 30% to about 130% in the width direction. The second substrate 200 may have a fracture elongation of about 40% to about 120% in the width direction.

Since the second substrate 200 has the improved mechanical strength as described above, it may efficiently protect the first transparent electrode 300, the second transparent electrode 400, the first discoloration layer 500, the second discoloration layer 600 and the electrolyte layer 700. In addition, since the second substrate 200 has the improved mechanical strength as described above, the mechanical strength of the mechanical strength of glass to be attached may be effectively reinforced.

The second substrate 200 may include glass. The second substrate 200 may be a glass substrate.

In addition, the second substrate 200 may have high chemical resistance. Accordingly, even if an electrolyte contained in the second substrate 200 leaks, damage to the surface of the second substrate 200 may be minimized.

The second substrate 200 may have improved optical properties. The second substrate 200 may have a total light transmittance of about 55% or more. The second substrate 200 may have a total light transmittance of about 70% or more. The second substrate 200 may have a total light transmittance of about 75% to about 99%. The second substrate 200 may have a total light transmittance of about 80% to about 99%.

A haze of the second substrate 200 may be about 20% or less. The haze of the second substrate 200 may be about 0.1% to about 20%. The haze of the second substrate 200 may be about 0.1% to about 10%. The haze of the second substrate 200 may be about 0.1% to about 7%.

Since the second substrate 200 has an appropriate total light transmittance and haze, the electrochromic element according to another embodiment may have improved optical properties. That is, since the second substrate 200 has an appropriate transmittance and haze, an improved appearance may be achieved by minimizing distortion of images from the outside while appropriately controlling a transmittance when the electrochromic element according to another embodiment is applied to a window.

In addition, the second substrate 200 may have an in-plane phase difference of about 100 nm to about 4000 nm. The second substrate 20 may have an in-plane phase difference of about 200 nm to about 3500 nm. The second substrate 200 may have an in-plane phase difference of about 200 nm to about 3000 nm.

The second substrate 200 may have an in-plane phase difference of about 7000 nm or more. The second substrate 200 may have an in-plane phase difference of about 7000 nm to about 50000 nm. The second substrate 200 may have an in-plane phase difference of about 8000 nm to about 20000 nm.

The in-plane phase difference may be derived from a refractive index and thickness according to the direction of the second substrate 200.

Since the second substrate 200 has the in-plane phase difference as described above, the electrochromic element according to an embodiment may have improved appearance.

The thickness of the second substrate 200 may be about 10 μm to about 200 μm. The thickness of the first substrate 100 may be about 23 μm to about 150 μm. The thickness of the first substrate 100 may be about 30 μm to about 120 μm.

The second substrate 200 may include an organic filler or an inorganic filler. The organic or inorganic filler may function as an anti-blocking agent.

An average particle diameter of the filler may be about 0.1 μm to about 5 μm The average particle diameter of the filler may be about 0.1 μm to about 3 μm. The average particle diameter of the filler may be about 0.1 μm to about 1 μm.

The filler may be at least one selected from the group consisting of silica particles, barium sulfate particles, alumina particles and titania particles.

In addition, the filler may be included in the second substrate 200 in a content of about 0.01 wt% to about 3 wt% of the total amount of the second substrate 200. The filler may be included in the second substrate 200 in a content of about 0.05 wt% to about 2 wt% of the total amount of the second substrate 200.

The second substrate 200 may have a single-layer structure. For example, the second substrate 200 may be a single-layer polyester film.

The second substrate 200 may have a multi-layer structure. For example, the second substrate 200 may be a multi-layer co-extruded film.

The first substrate 100 and the second substrate 200 may be flexible. Accordingly, Accordingly, the electrochromic element according to another embodiment may be flexible overall.

The first transparent electrode 300 is disposed on the first substrate 100. The first transparent electrode 300 may be deposited on the first substrate 100. In addition, a hard coating layer may be further included between the first transparent electrode 300 and the first substrate 100.

The first transparent electrode 300 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the first transparent electrode 300 may include graphene, silver nanowires and/or metal mesh.

The first transparent electrode 300 may have a total light transmittance of about 80% or more. The first transparent electrode 300 may have a total light transmittance of about 85% or more. The first transparent electrode 300 may have a total light transmittance of about 88% or more.

The first transparent electrode 300 may have a haze of about 10% or less. The first transparent electrode 300 may have a haze of about 7% or less. The first transparent electrode 300 may have a haze of about 5% or less.

A surface resistance of the first transparent electrode 300 may be about 1 Ω/sq to 60 Ω/sq The surface resistance of the first transparent electrode 300 may be about 1 Ω/sq to 40 Ω/sq. The surface resistance of the first transparent electrode 300 may be about 1 Ω/sq to 30 Ω/sq.

The thickness of the first transparent electrode 300 may be about 50 nm to about 50 μm. The thickness of the first transparent electrode 300 may be about 100 nm to about 10 μm. The thickness of the first transparent electrode 300 may be about 150 nm to about 5 μm.

The first transparent electrode 300 is electrically connected to the first discoloration layer 500. In addition, the first transparent electrode 300 is electrically connected to the electrolyte layer 700 through the first discoloration layer 500.

The second transparent electrode 400 is disposed under the second substrate 200. The second transparent electrode 400 may be deposited on the second substrate 200. In addition, a hard coating layer may be further included between the second transparent electrode 400 and the second substrate 200.

The second transparent electrode 400 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the second transparent electrode 400 may include graphene, silver nanowires and/or metal mesh.

The second transparent electrode 400 may have a total light transmittance of about 80% or more. The second transparent electrode 400 may have a total light transmittance of about 85% or more. The second transparent electrode 400 may have a total light transmittance of about 88% or more.

The second transparent electrode 400 may have a haze of about 10% or less. The second transparent electrode

400 may have a haze of about 7% or less. The second transparent electrode 400 may have a haze of about 5% or less.

The surface resistance of the second transparent electrode 400 may be about 1 Ω/sq to 60 Ω/sq. The surface resistance of the second transparent electrode 400 may be about 1 Ω/sq to 40 Ω/sq. The surface resistance of the second transparent electrode 400 may be about 1 Ω/sq to 30 Ω/sq.

The thickness of the second transparent electrode 400 may be about 50 nm to about 50 $\mu$m. The thickness of the second transparent electrode 400 may be about 100 nm to about 10 $\mu$m. The thickness of the second transparent electrode 400 may be about 150 nm to about 5 $\mu$m.

The second transparent electrode 400 is electrically connected to the second discoloration layer 600. In addition, the second transparent electrode 400 is electrically connected to the electrolyte layer 700 through the second discoloration layer 600.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300. The first discoloration layer 500 may directly access the first transparent electrode 300. In addition, the first discoloration layer 500 is electrically connected to the electrolyte layer 700. The first discoloration layer 500 may be electrically connected to the electrolyte layer 700.

The first discoloration layer 500 may be discolored when supplied with electrons. The first discoloration layer 500 may include a first electrochromic material whose color changes when supplied with electrons. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first discoloration layer 500 may include the first electrochromic material in the form of particles. The tungsten oxide, the niobium pentoxide, the vanadium pentoxide, the titanium oxide and the molybdenum oxide may be particles having a particle diameter of about 1nm to about 200 nm. That is, the diameter of the first electrochromic particles included in the first discoloration layer 500 may be about 2 nm to about 150 nm. The diameter of the first electrochromic particles included in the first discoloration layer 500 may be about 5 nm to about 100 nm. The diameter of the first electrochromic particles included in the first discoloration layer 500 may be about 10 nm to about 50 nm.

The first discoloration layer 500 may include the first electrochromic material in a content of about 70 wt% to about 98 wt% based on the total weight of based on the total weight of the first discoloration layer 500. The first discoloration layer 500 may include the first electrochromic material in a content of about 80 wt% to about 96 wt% based on the total weight of the first discoloration layer 500. The first discoloration layer 500 may include the first electrochromic material in a content of about 85 wt% to about 94 wt% based on the total weight of the first discoloration layer 500.

In addition, the first discoloration layer 500 may further include a binder. The binder may be an inorganic binder. The binder may include a silica gel. The binder may be formed by a silica sol containing tetramethoxysilane or methyltrimethoxysilane.

The first discoloration layer 500 may include the binder in a content of about 1 wt% to 20 wt% based on the total weight of the first discoloration layer 500. The first discoloration layer 500 may include the binder in a content of about 2 wt% to 15 wt% based on the total weight of the first discoloration layer 500. The first discoloration layer 500 may include the binder in a content of about 3 wt% to 10 wt% based on the total weight of the first discoloration layer 500.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may directly access the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm. That is, a diameter of second electrochromic particles included in the second discoloration layer 600 may be about 2 nm to about 150 nm. The diameter of the second electrochromic particles may be about 5 nm to about 100 nm. The diameter of the second electrochromic particles may be about 10 nm to about 50 nm.

The second discoloration layer 600 may include the second electrochromic material in a content of about 70 wt% to about 98 wt% based on the total weight of the second discoloration layer 600. The second discoloration layer 600 may include the second electrochromic material in a content of about 80 wt% to about 96 wt% based on the total weight of the

second discoloration layer 600. The second discoloration layer 600 may include the second electrochromic material in a content of about 85 wt% to about 94 wt% based on the total weight of the second discoloration layer 600.

In addition, the second discoloration layer 600 may further include the binder. The binder may be an inorganic binder. The binder may include a silica gel. The binder may be formed by a silica sol containing tetramethoxysilane or methyltrimethoxysilane.

The second discoloration layer 600 may include the binder in a content of about 1 wt% to 20 wt% based on the total weight of the second discoloration layer 600. The second discoloration layer 600 may include the binder in a content of about 2 wt% to 15 wt% based on the total weight of the second discoloration layer 600. The second discoloration layer 600 may include the binder in a content of about 3 wt% to 10 wt% based on the total weight of the first discoloration layer 500.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include cations involved in an electrochromic reaction. The cations may include metal ions. The metal ions may be at least one selected from the group consisting of lithium ions ($Li^+$), sodium ions ($Na^+$) and potassium ions ($K^+$). The cations may be rubidium ions ($Rb^+$) or cesium ions ($Cs^+$).

The electrolyte layer 700 includes a solvent. The solvent may be at least one selected from the group consisting of acetamide, adiponitrile, sulfolane and polyethyleneglycol.

The electrolyte layer 700 may include a metal salt. The metal salt may be at least one selected from the group consisting of $LiClO_4$, $LiBF_4$, $LiAsF_6$, $LiPF_6$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_{2\ N}Li$ and $NaClO_4$.

In addition, the electrolyte layer 700 may include a Cl or F element-containing compound as a metal salt. The electrolyte layer 700 may include one or more metal salts selected from among $LiClO_4$, $LiBF_4$, $LiAsF_6$, $LiPF_6$, LiCl, $LiB_{10}Cl_{10}$, $LiCF_3SO_3$, $LiCF_3CO_2$, $LiAsF_6$, $LiSbF_6$, $LiAlCl_4$, $CF_3SO_3Li$, $(CF_3SO_2)_{2\ N}Li$ and $NaClO_4$.

The electrolyte layer 700 may include a curable resin composition that can be cured by ultraviolet irradiation or heat. The curable resin composition may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocuring initiator and/or a thermal curing initiator.

In more detail, the electrolyte layer 700 may include a curable resin composition. The curable resin composition may have photo-curability and/or thermosetting property.

The curable resin composition may include an acrylate copolymer.

The acrylate copolymer may be at least one selected from the group consisting of urethane acrylate and epoxy acrylate.

The molecular weight of the urethane acrylate may be about 3000 g/mol to about 50000 g/mol. The molecular weight of the urethane acrylate may be about 5000 g/mol to about 50000 g/mol.

The urethane acrylate may include an ether-based urethane acrylate.

The ether-based urethane acrylate may include a first polyol, a diisocyanate and an acrylate. The ether-based urethane acrylate may be formed by reacting with the polyether diol, the diisocyanate and the acrylate.

The ether-based urethane acrylate may include a first polyol having a molecular weight of about 100 g/mol to about 1000 g/mol; a first diisocyanate having a molecular weight of about 100 g/mol to about 1000 g/mol; and a first acrylate having a molecular weight of about 50 g/mol to about 500 g/mol.

The first polyol may have a molecular weight of about 100 g/mol to about 1000 g/mol. The first polyol may have a molecular weight of about 200 g/mol to about 1000 g/mol. The first polyol may have a molecular weight of about 200 g/mol to about 700 g/mol.

The first polyol may include polyether diol.

The first polyol may include poly(tetramethylene ether)diol.

The ether-based urethane acrylate may include the first polyol in a content of about 60 mol parts to about 100 mol parts based on 100 mol parts of the first diisocyanate. The ether-based urethane acrylate may include the first polyol in a content of about 65 mol parts to about 95 mol parts based on 100 mol parts of the first diisocyanate. The ether-based urethane acrylate may include the first polyol in a content of about 70 mol parts to about 90 mol parts based on 100 mol parts of the first diisocyanate.

The first diisocyanate may have a molecular weight of about 100 g/mol to about 1000 g/mol.

The first diisocyanate may be one or more selected from the group consisting of isophorone diisocyanate, toluene diisocyanate, hexamethylene diisocyanate and methylene diphenyl diisocyanate.

The first diisocyanate may be an isophorone diisocyanate.

The first diisocyanate may be included in a content of about 30 mol% to about 70 mol% in the ether-based urethane acrylate based on the total mole number of the ether-based urethane acrylate. The diisocyanate may be included in a content of about 40 mol% to about 60 mol% in the ether-based urethane acrylate based on the total mole number of the

ether-based urethane acrylate.

The first acrylate may have a molecular weight of about 50 g/mol to about 500 g/mol.

The first acrylate may include a monoacrylate.

The first acrylate may be at least one selected from the group consisting of 2-hydroxyethyl acrylate and 2-hydroxypropyl acrylate methacrylate.

The ether-based urethane acrylate may include the first acrylate in a content of about 20 mol parts to about 40 mol parts based on 100 mol parts of the first diisocyanate. The ether-based urethane acrylate may include the first acrylate in a content of about 23 mol parts to about 37 mol parts based on 100 mol parts of the first diisocyanate. The ether-based urethane acrylate may include the first acrylate in a content of about 25 mol parts to about 35 mol parts based on 100 mol parts of the first diisocyanate.

The ether-based urethane acrylate may have a weight average molecular weight of about 1000 g/mol to about 100000 g/mol. The weight average molecular weight of the ether-based urethane acrylate may be about 2000 g/mol to about 70000 g/mol. The weight average molecular weight of the ether-based urethane acrylate may be about 5000 g/mol to about 50000 g/mol.

The ether-based urethane acrylate may include a second diisocyanate, a second polyol and a second acrylate.

The second diisocyanate may include an aliphatic diisocyanate.

The second diisocyanate may be at least one selected from the group consisting of hexamethylene diisocyanate, toluene diisocyanate, dicyclohexylmethane-4,4'-diisocyanate (H12MDI) and methylene diphenyl diisocyanate.

The second diisocyanate may be included in a content of about 20 mol% to about 60 mol% in the ether-based urethane acrylate based on 100 mol% of the ether-based urethane acrylate. The second diisocyanate may be included in a content of about 30 mol% to about 50 mol% in the ether-based urethane acrylate based on 100 mol% of the ether-based urethane acrylate.

The second polyol may include a polyester diol or a polycaprolactone diol.

A weight average molecular weight of the polycaprolactone diol may be about 100 g/mol to about 1000 g/mol. The weight average molecular weight of the polycaprolactone diol may be about 100 g/mol to about 800 g/mol. The weight average molecular weight of the polycaprolactone diol may be about 200 g/mol to about 800 g/mol.

The second acrylate may be at least one selected from the group consisting of 2-hydroxyethyl acrylate and 2-hydroxypropyl acrylate methacrylate.

The molecular weight of the ether-based urethane acrylate may be about 3000 g/mol to about 50000 g/mol. The molecular weight of the ether-based urethane acrylate may be about 5000 g/mol to about 50000 g/mol.

A viscosity of the urethane acrylate at about 25°C may be about 10000 cPs to about 100000 cPs. A viscosity of the urethane acrylate at about 60°C may be about 1000 cPs to about 8000 cPs.

The urethane acrylate is commercially available. The urethane acrylate may be at least one selected from the group consisting of, for example, Miramer PU210, Miramer PU256, Miramer PU2050, Miramer PU2100, Miramer PU2300C, Miramer PU2560, Miramer PU320, Miramer PU340, Miramer PU3000, Miramer PU3200, Miramer PU3450, Miramer PU5000, Miramer PU610, Miramer MU9500, Miramer MU9800, Miramer SC2154, Miramer SC2404 or Miramer SC2565 among MIWON Co.'s products.

The acrylate copolymer may include an epoxy acrylate.

The epoxy acrylate may be formed by reacting an epoxy compound and acrylate. A molar ratio of the epoxy compound to the acrylate may be about 1:1.5 to about 1:3.5.

The epoxy compound may be at least one selected from the group consisting of glycerol diglycidyl ether, a bisphenol A epoxy compound, a bisphenol F epoxy compound and a novolac epoxy compound.

The acrylate may be at least one selected from the group consisting of 2-carboxyethyl acrylate, 2-hydroxyethyl acrylate and acrylic acid.

The epoxy acrylate may have a weight average molecular weight of about 200 g/mol to about 3000 g/mol. The epoxy acrylate may have a weight average molecular weight of about 500 g/mol to about 2000 g/mol. The epoxy acrylate may have a weight average molecular weight of about 500 g/mol to about 2000 g/mol.

The epoxy acrylate may have a viscosity of about 100 cPs to about 5000 cPs at about 25°C. The epoxy acrylate may have a viscosity of about 100 cPs to about 5000 cPs at about 25°C. The epoxy acrylate may have a viscosity of about 10000 cPs to about 40000 cPs at about 25°C.

In addition, the epoxy acrylate may have a viscosity of about 3000 cPs to about 8000 cPs at about 40°C.

In addition, the epoxy acrylate may have a viscosity of about 200 cPs to about 6000 cPs at about 60°C.

The epoxy acrylate is commercially available. The epoxy acrylate may be at least one selected from the group consisting of, for example, Miramer PE210, Miramer PE250, Miramer SC6300, Miramer SC6400, Miramer PE110H, Miramer PE230, Miramer PE310, Miramer EA2235, Miramer EA2255, Miramer EA2259 or Miramer EA2280 among MIWON Co.'s products.

The curable resin composition may further include a multifunctional acrylate monomer.

The multifunctional acrylate monomer may include a difunctional acrylate or a trifunctional acrylate.

The multifunctional acrylate monomer may include two or more functional groups. The multifunctional acrylate monomer may be a monomer including two or more functional acrylate groups. The multifunctional acrylate monomer may be an aliphatic compound including three acrylates.

The multifunctional acrylate monomer may be at least one selected from the group consisting of trimethylolpropane triacrylate, trimethylolpropane (ethylene oxide)$_3$ triacrylate (trimethylolpropane (EO)$_3$ triacrylate), trimethylolpropane (ethylene oxide)$_6$ triacrylate (trimethylolpropane (EO)$_6$ triacrylate), trimethylolpropane (ethylene oxide)$_9$ triacrylate (trimethylolpropane (EO)$_9$ triacrylate), trimethylolpropane (ethylene oxide)$_{15}$ triacrylate (trimethylolpropane (EO)$_{15}$ triacrylate), glycerin (propylene oxide)$_3$ triacrylate (glycerine (PO)$_3$ triacrylate) and pantaerythritol triacrylate.

The multifunctional acrylate monomer may have a molecular weight of about 200 to about 800. The multifunctional acrylate monomer may have a molecular weight of about 200 to about 400.

The multifunctional acrylate monomer may have a viscosity of about 20 cps to about 300 cps at about 25°C.

The multifunctional acrylate monomer may be included in a content of about 5 wt% to about 30 wt% in the curable resin composition based on the total weight of the curable resin composition. The multifunctional acrylate monomer may be included in a content of about 10 wt% to about 25 wt% in the curable resin composition based on the total weight of the curable resin composition. The multifunctional acrylate monomer may be included in a content of about 13 wt% to about 23 wt% in the curable resin composition based on the total weight of the curable resin composition.

The curable resin composition may include a monofunctional acrylate monomer. The monofunctional acrylate monomer may be a monomer including one functional acrylate group. The monofunctional acrylate monomer may be an aromatic compound including one functional acrylate group.

The monofunctional acrylate monomer may be at least one selected from the group consisting of caprolactone acrylate, cyclic trimethylolpropane formal acrylate, phenoxy benzyl acrylate, 3,3,5-trimethyl cyclohexyl acrylate, isobornyl acrylate, o-phenylphenol EO acrylate, 4-tert-butylcyclohexyl acrylate, benzyl acrylate, biphenylmethyl acrylate, lauryl acrylate, isodecyl acrylate, phenol(ethylene oxide) acrylate (phenol(EO) acrylate), phenol(ethylene oxide)$_2$ arylate (phenol(EO)$_2$ acrylate), phenol(ethylene oxide)$_4$ acrylate (phenol(EO)$_4$ acrylate) and tetra hydrofurfuryl acrylate.

In addition, the molecular weight of the monofunctional acrylate monomer may be about 150 to about 800. The molecular weight of the monofunctional acrylate monomer may be about 200 to about 400.

In addition, a viscosity of the monofunctional acrylate monomer at about 25°C may be about 10 cps to about 60 cps.

The monofunctional acrylate monomer may be included in a content of about 5 wt% to about 20 wt% in the curable composition based on the weight of the curable composition. The monofunctional acrylate monomer may be included in a content of about 5 wt% to about 10 wt% in the curable composition based on the weight of the curable composition. The monofunctional acrylate monomer may be included in a content of about 10 wt% to about 15 wt% in the curable composition based on the total weight of the curable composition.

The curable composition may include acrylate including a thermosetting functional group. That is, the acrylate including a thermosetting functional group may have both thermosetting property and photo-curability.

The thermosetting acrylate may be at least one selected from the group consisting of urethane acrylate including a thermosetting functional group, epoxy acrylate including a thermosetting functional group, ester-based acrylate including a thermosetting functional group and ether-based acrylate including a thermosetting functional group.

The thermosetting acrylate may include a carboxyl group. The thermosetting acrylate may be at least one of compounds represented by Chemical Formulas 1 to 9 below:

[Chemical Formula 1]

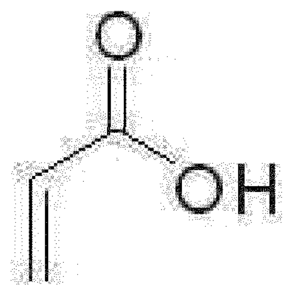

[Chemical Formula 2]

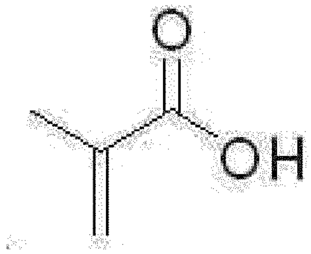

[Chemical Formula 3]

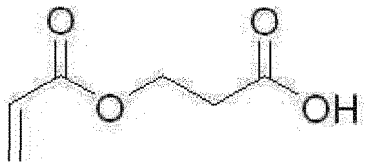

[Chemical Formula 4]

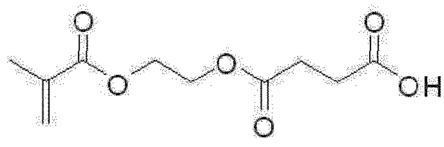

[Chemical Formula 5]

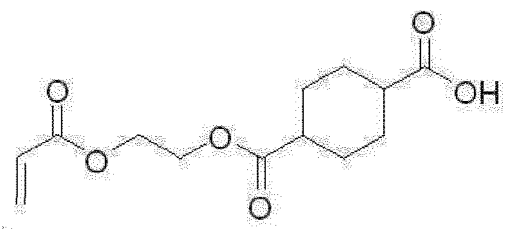

[Chemical Formula 6]

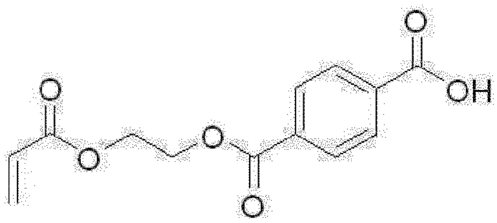

[Chemical Formula 7]

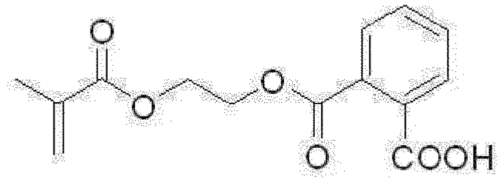

[Chemical Formula 8]

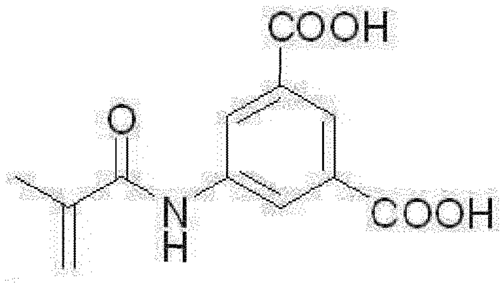

[Chemical Formula 9]

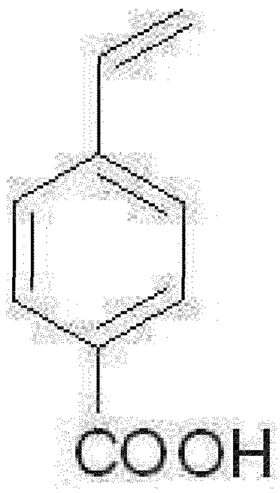

The thermosetting acrylate may be included in a content of about 1 wt% to about 10 wt% in the curable resin composition based on the total weight of the curable resin composition. The thermosetting acrylate may be included in a content of about 0.5 wt% to about 5 wt% in the curable resin composition based on the total weight of the curable resin composition. The thermosetting acrylate may be included in a content of about 2 wt% to about 8 wt% in the curable resin composition based on the total weight of the curable resin composition.

Since the curable resin composition includes the thermosetting acrylate, a coating layer of the electrolyte composition that is coated with an electrolyte composition including the curable resin composition may be easily cured or semi-cured.

Accordingly, the coating layer of the electrolyte composition may be effectively protected against external physical and chemical impacts.

The curable resin composition may further include a photocurable initiator.

The photoinitiator may be one or more selected from the group consisting of benzophenone-based photoinitiators, thioxanthone-based photoinitiators, $\alpha$-hydroxy ketone-based photoinitiators, ketone-based photoinitiators, phenyl glyoxylate-based photoinitiators and acryl phosphine oxide-based photoinitiators.

The photoinitiator may be included in a content of about 0.1 wt% to about 5 wt% in the curable resin composition based on the total weight of the curable resin composition.

The photocurable resin composition may include a first photoinitiator and second photoinitiator that operate in different wavelength bands.

Specifically, the curable resin composition may include a first photoinitiator operating in a wavelength band of 208 nm to 295 nm; and a second photoinitiator operating in a wavelength band of 320 nm to 395 nm.

An operating wavelength band of the first photoinitiator may be 208 nm to 275 nm, or 208 nm to 245 nm, and an operating wavelength band of the second photoinitiator may be 330 nm to 390 nm, or 340 nm to 385 nm.

As a specific example, the first photoinitiator may generate radicals by UV light having a wavelength band of 208 nm to 295 nm and an amount of 100 $mJ/cm^2$ to 200 $mJ/cm^2$. In addition, the second photoinitiator may be decomposed and generate radicals by UV light having a wavelength band of 320 nm to 395 nm and an amount of 500 $mJ/cm^2$ to 1000 $mJ/cm^2$.

The first photoinitiator may be, for example, a ketone-based photoinitiator, and may have one or more aromatic groups or alicyclic groups. A specific example of the first photoinitiator includes hydroxycyclohexylphenyl ketone.

The second photoinitiator may be, for example, a phosphine-based photoinitiator, and may have one or more aromatic groups. A specific example of the second photoinitiator includes 2,4,6-trimethylbenzoyldiphenylphosphine.

Since the curable resin composition includes the first photoinitiator and the second photoinitiator, a coating layer of the electrolyte composition which is coated with an electrolyte composition including the curable resin composition may be easily cured or semi-cured. That is, ultraviolet rays of a specific wavelength may be used, and the coating layer of the electrolyte composition may be easily cured or semi-cured.

Accordingly, the coating layer of the electrolyte composition may be effectively protected against external physical and chemical impacts.

The electrolyte layer 700 may further include an antioxidant.

The antioxidant may be at least one selected from the group consisting of phenol-based antioxidants, sulfur-based antioxidants, amine-based antioxidants, polyimide-based antioxidants and phosphorus-based antioxidants.

The antioxidant may be included in a content of 0.1 wt% to about 5 wt% in the electrolyte layer 700 based on the total weight of the electrolyte layer 700. The antioxidant may be included in a content of about 0.1 wt% to about 3 wt% in the electrolyte layer 700.

Since the electrolyte layer 700 includes the antioxidant, it may be easily protected from chemical shocks such as external oxygen. Accordingly, the electrolyte layer 700 may have a constant transmittance even if left for a long time.

The thickness of the electrolyte layer 700 may be about 10 $\mu$m to about 200 $\mu$m The thickness of the electrolyte layer 700 may be about 50 $\mu$m to about 150 $\mu$m.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm or a wavelength of 550 nm. The transmittance may be measured using a known haze meter (HM).

The electrochromic element according to an embodiment may further include a sealing part (not shown).

The sealing part includes a curable resin. The sealing part may include a thermosetting resin and/or a photocurable resin.

Examples of the thermosetting resin include epoxy resin, melamine resin, urea resin, unsaturated polyester resin, and the like. In addition, examples of the epoxy resin include phenol novolac-type epoxy resin, cresol novolac-type epoxy resin, biphenyl novolac-type epoxy resin, trisphenol novolac-type epoxy resin, dicyclopentadiene novolac-type epoxy resin, bisphenol A-type epoxy resin, bisphenol F-type epoxy resin, 2, 2'-diarylbisphenol A-type epoxy resin, bisphenol S-type epoxy resin, hydrogenated bisphenol A-type epoxy resin, propylene oxide-added bisphenol A-type epoxy resin, biphenyl type epoxy resin, naphthalene-type epoxy resin, resorcinol-type epoxy resin, glycidyl amines, and the like.

In addition, the sealing part may further include a heat-curing agent. Examples of the sealing part include hydrazide compounds such as 1, 3-bis[hydrazinocarbonoethyl 5-isopropyl hydantoin], adipic acid (adipic acid) hydrazide; dicyandiamide, guanidine derivatives, 1-cyanoethyl-2-phenyl imidazole, N-[2-(2-methyl-1-imidazolyl) ethyl]urea, 2, 4-diamino-6-[2'-methylimidazolyl(1')]-ethyl-s-thoriazine, N,N'-bis(2-methyl-1-imidazolyl ethyl) urea, N, N'-(2-methyl-1-imidazolyl ethyl)-azipoamido, 2-phenyl-4-methyl-5-hydroxymethyl imidazole, 2-imidazoline-2-thiol, 2, 2'-thiodiethanethiol, additional products of various amines and epoxy resins, and the like.

The first sealing part may include a photocurable resin. Examples of the photocurable resin include acrylate-based resins such as urethane acrylate, and the like. In addition, the sealing part may further include a photocurable initiator. The photocurable initiator may be at least one selected from the group consisting of acetophenone-based

compounds, benzophenone-based compounds, thioxanthone-based compounds, benzoin-based compounds, triazine-based compounds and oxime-based compounds.

In addition, the sealing part may further include a moisture absorbent such as zeolite and/or silica. In addition, the sealing part may further include an inorganic filler. The inorganic filler may have a material having high insulating nature, transparency and durability. Examples of the inorganic filler include silicon, aluminum, zirconia, a mixture thereof, and the like.

In addition, the electrochromic element according to an embodiment may further include a first bus bar (not shown) and a second bus bar (not shown).

The first bus bar may be disposed on the first transparent electrode 300. The first bus bar may access the first transparent electrode 300.

The first bus bar may be electrically connected to the first transparent electrode 300. The first bus bar may be in direct contact with the upper surface of the first transparent electrode 300. The first bus bar may access the first transparent electrode 300 through solder.

The second bus bar is disposed under the second transparent electrode 400. The second bus bar access the second transparent electrode 400.

The second bus bar may be electrically connected to the second transparent electrode 400. The second bus bar may be in direct contact with the lower surface of the second transparent electrode 400. The second bus bar may access the second transparent electrode 400 through solder.

The first bus bar and/or the second bus bar may include a metal. The first bus bar and/or the second bus bar may include a metal ribbon. The first bus bar and/or the second bus bar may include a conductive paste. The first bus bar and/or the second bus bar may include a binder and a conductive filler.

The electrochromic element according to an embodiment may be fabricated by the following method. FIGS. 2 to 5 are sectional views illustrating a process of fabricating the electrochromic element according to an embodiment.

Referring to FIG. 2, a first transparent electrode 300 is formed on a first substrate 100. The first transparent electrode 300 may be formed by a vacuum deposition process. A metal oxide such as indium tin oxide may be deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that a layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. A first sol solution including a first electrochromic material, a binder and a solvent may be coated on the layer of the first transparent electrode 300. A sol-gel reaction may occur in the coated first sol solution, and the first discoloration layer 500 may be formed.

The first sol solution may include the first discoloration material in a content of about 5 wt% to about 30 wt% in the form of particles. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Referring to FIG. 3, an electrolyte composition for forming an electrolyte layer 700 is coated on the first discoloration layer 500. Accordingly, an electrolyte composition layer 701 is formed on the first discoloration layer 500.

The electrolyte composition may include the solvent, metal salt and curable resin composition as described above. In addition, the electrolyte composition may further include an additional additive such as the antioxidant.

Next, a protective layer 900 is formed on the electrolyte composition layer 701. The protective layer 900 may be a polymer film including a release layer. The protective layer 900 may be a polyethylene terephthalate film including the release layer. The thickness of the polyethylene terephthalate film may be about 30 $\mu$m to about 100 $\mu$m. The protective layer 900 may protect the electrolyte composition layer 701. In addition, since the protective layer 900 includes the release layer, the protective layer 900 may be easily removed when the electrolyte composition layer 701 is laminated on another layer.

Next, the electrolyte composition layer 701 may be cured or semi-cured.

The electrolyte composition layer 701 may be cured or semi-cured by heat. The electrolyte composition layer 701 may be cured or semi-cured at about 30°C to about 60°C for about 1 minute to about 10 minutes.

The electrolyte composition layer 701 may be cured or semi-cured by light. The electrolyte composition layer 701 may be cured or semi-cured by UV light having a wavelength band of 320 nm to 395 nm and an amount of 500 $mJ/cm^2$ to 1000 $mJ/cm^2$.

Accordingly, a first laminate 11 including the first substrate 100, the first transparent electrode 300, the first discoloration layer 500 and the electrolyte composition layer 701 may be formed. The first laminate 11 has a structure for fabricating the electrochromic element according to an embodiment. In addition, the protective layer 900 may be disposed on the first laminate 11. The protective layer 900 may cover the upper surface of the electrolyte composition layer 701.

Referring to FIG. 4, a second transparent electrode 400 is formed on a second substrate 200.

The second transparent electrode 400 may be formed by a vacuum deposition process. A conductive metal oxide such as indium tin oxide may be deposited on the second substrate 200 by a sputtering process, etc., so that the second transparent electrode 400 may be formed.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the second transparent electrode 400. The second discoloration layer 600 may be formed by a sol-gel coating process. A second sol solution including a second electrochromic material, a binder and a solvent may be coated on the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

Accordingly, a second laminate 12 including the second substrate 200, the second transparent electrode 400 and the second discoloration layer 600 is formed. The second laminate 12 may be a structure for forming the electrochromic element according to an embodiment. In addition, a release liner film for protecting the second discoloration layer 600 may be further disposed on the second discoloration layer 600.

Prior to the lamination process described below, the first laminate 11 may be left for about 60 days or more. For example, the first laminate 11 may be transported for about 60 days or more. The first laminate 11 may be transported for about 90 days or more. The first laminate 11 may be transported for about 120 days or more.

The first laminate 11 may be stored or transported for the above period in a rolled state. In addition, the first laminate 11 may be stored or transported at room temperature and a humidity state of about 30% to about 60% for the above period or longer.

In addition, prior to the lamination process described below, the second laminate 12 may be left for about 60 days or more. For example, the second laminate 12 may be transported for about 60 days or more. The second laminate 12 may be transported for about 90 days or more. The second laminate 12 may be transported for about 120 days or more.

The second laminate 12 may be stored or transported for the above period in a rolled state. In addition, the second laminate 12 may be stored or transported at room temperature and a humidity state of about 30% to about 60% for the above period.

Referring to FIG. 5, the second substrate 200, the second transparent electrode 400 and the second discoloration layer 600 are laminated on the electrolyte composition layer 701. Here, the second discoloration layer 600 is brought into direct contact with the electrolyte composition layer 701. In addition, the protective layer 900 is removed, and the second discoloration layer 600 is laminated on the electrolyte composition layer 701.

The lamination process may be performed after the above period has elapsed.

Next, the electrolyte composition layer 701 is cured by light, and a first laminate 11 including the first substrate 100, the first transparent electrode 300 and the first discoloration layer 500 and a second laminate 12 including the second substrate 200, the second transparent electrode 400 and the second discoloration layer 600 are laminated to each other. That is, the first laminate 11 and the second laminate 12 may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, the light transmittance may mean a total light transmittance.

The light transmittance of the electrochromic element may be about 70% to about 90%. The light transmittance of the electrochromic element may be about 75% to about 88%. The light transmittance of the electrochromic element may be

about 78% to about 86%. The light transmittance of the electrochromic element may be about 65% to about 80%.

The electrochromic element according to an embodiment may have a haze of about 5% or less. The haze of the electrochromic element according to an embodiment may be about 0.1% to about 5%. The haze of the electrochromic element according to an embodiment may be about 0.1% to about 4%. The haze of the electrochromic element according to an embodiment may be about 0.1% to about 3%.

In the first laminate 11, a decrease in transmittance after 90 days may be measured by Measurement Method 1 below:

[Measurement Method 1]

A transmittance decrease is a difference between the initial transmittance of the first laminate 11 and the transmittance of the first laminate 11 after 90 days when the protective layer 900 disposed on the first laminate 11 is left at room temperature and a relative humidity of 60% for 90 days.

The transmittance of the first laminate 11 and the transmittance of the first laminate 11 after 90 days may be total light transmittances.

The transmittance decrease may be less than about 10%. The transmittance decrease may be less than about 7%. The transmittance decrease may be less than about 5%. The transmittance decrease may be less than about 4%. The transmittance decrease may be less than about 3%. The transmittance decrease may be less than about 2%.

The initial transmittance may be about 80% to about 95%. The initial transmittance may be about 85% to about 95%.

The transmittance after 90 days may be about 76% to about 95%. The transmittance after 90 days may be about 81% to about 90%. The transmittance after 90 days may be about 84% to about 95%.

In the first laminate 11, an increase in haze after 90 days may be measured by Measurement Method 2 below:

[Measurement Method 2]

When the first laminate 11 is left at room temperature and 60% relative humidity for 90 days in a state where the protective layer 900 is disposed on the electrolyte composition layer 701, the haze increase is a difference between the haze of the first laminate 11 after 90 days and the initial haze of the first laminate 11.

The haze increase may be less than about 10%. The haze increase may be less than about 7%. The haze increase may be less than about 5%. The haze increase may be less than about 4%. The haze increase may be less than about 3%. The haze increase may be less than about 2%.

The initial haze may be less than about 5%. The initial haze may be less than about 4%. The initial haze may be less than about 3%. The initial haze may be less than about 2%.

The haze after 90 days may be less than about 6%. The haze after 90 days may be less than about 5%. The haze after 90 days may be less than about 4%. The haze after 90 days may be less than about 3%.

In addition, in the first laminate 11, a deviation in transmittance after 90 days may be measured by Measurement Method 3 below:

[Measurement Method 3]

In a state where the protective layer 900 is disposed on the electrolyte composition layer 701, the first laminate 11 is left at room temperature and 60% relative humidity for about 90 days. Next, a transmittance in each of measurement regions of the first laminate 11 is measured, and the transmittance deviation is a value obtained by dividing a difference between a maximum transmittance of the measurement regions and a minimum transmittance thereof by an average transmittance.

The measurement region may be a square region of 10 cm × 10 cm. The transmittance deviation may be measured for each of the measurement regions in a region of about 100 cm × 100 cm. The transmittance may be measured at five points in each of the measurement regions.

The transmittance deviation may be less than about 0.2. The transmittance deviation may be less than about 0.15. The transmittance deviation may be less than about 0.10. The transmittance deviation may be less than about 0.05.

The transmittance deviation may be calculated by Equation 1 below:

Transmittance deviation = (Maximum transmittance - Minimum transmittance) / Average transmittance [Equation 1]

In addition, a driving range difference in the first laminate 11 may be measured by Measurement Method 4 below:

[Measurement Method 4]

In a state where the protective layer 900 is disposed, the first laminate 11 is left at room temperature and 60% relative humidity for about 90 days. Next, a second coloring transmittance and second discoloring transmittance of the first laminate 11 are measured, a first coloring transmittance and first discoloring transmittance before the first laminate 11 is left are measured, a difference between the first coloring transmittance and the first discoloring transmittance is a first driving range, a difference between the second coloring transmittance and the second discoloring transmittance is a second driving range, and the driving range difference is a difference between the first a driving range and the second driving range.

The driving range difference may be less than about 20%. The driving range difference may be less than about less than 15%. The driving range difference may be less than about 10%. The driving range difference may be less than about less than 5%.

The electrochromic element according to an embodiment may have a driving range deviation measured by Measurement Method 5 below:

[Measurement Method 5]

In each of the measurement regions of the electrochromic element, a transmittance when discolored, and a transmittance when colored are measured, a driving range in the measurement region is a difference between the transmittance when discolored and the transmittance when colored, and the driving range deviation is a value obtained by dividing a difference between a maximum driving range and minimum driving range in the measurement regions by an average driving range.

The driving range deviation may be less than 0.2. The driving range deviation may be less than 0.15. The driving range deviation may be less than 0.1. The driving range deviation may be less than 0.05.

The second laminate 12 may have a transmittance decrease, haze increase, transmittance deviation and driving range deviation in the ranges provided in the description of the first laminate 11.

In the electrochromic element according to an embodiment, the first laminate 11 may have an appropriate decrease in transmittance after 90 days, as described above.

In addition, the first laminate 11 may have an appropriate haze increase after 90 days as described above. In addition, the first laminate 11 may have an appropriate transmittance deviation. In addition, the first laminate 11 may have an appropriate driving range difference.

In addition, the embodiment may have an appropriate driving range deviation as described above.

Accordingly, since the first laminate 11 maintains its performance even when stored for a long time, the method of fabricating the electrochromic element according to an embodiment may provide an electrochromic element having improved optical properties.

In addition, since the first laminate 11 maintains its performance even when stored for a long time, the method of fabricating the electrochromic element according to an embodiment may provide an electrochromic element with improved performance even if the transportation period of the first laminate 11 and the second laminate 12 takes a long time after manufacturing the first laminate 11 and the second laminate 12.

Accordingly, the method of fabricating the electrochromic element according to an embodiment may provide an electrochromic element having improved performance even if the first laminate 11 and the second laminate 12 are manufactured separately at different times and/or spaces.

Accordingly, the method of fabricating the electrochromic element according to an embodiment may easily manufacture an electrochromic element having improved performance at a low cost.

In addition, since the first laminate 11 and the second laminate 12 according to an embodiment are transported in a semi-finished state, the first laminate 11 and the second laminate 12 may be easily wound and transported.

Accordingly, the method of fabricating the electrochromic element according to an embodiment may be an efficient and easy method.

The electrochromic element according to another embodiment may be fabricated by the following method. FIGS. 6 to 9 are sectional views illustrating a process of fabricating the electrochromic element according to an embodiment.

Referring to FIG. 6, a first transparent electrode 300 is formed on a first substrate 100.

Next, a first discoloration layer 500 is formed on the layer of the first transparent electrode 300. The first discoloration layer 500 may be formed by a sol-gel coating process. The first sol solution including a first electrochromic material, a binder and a solvent may be coated on the layer of the first transparent electrode 300. A sol-gel reaction may occur in the coated first sol solution, and the first discoloration layer 500 may be formed.

The first electrochromic material may include at least one selected from the group consisting of tungsten oxide, niobium pentoxide, vanadium pentoxide, titanium oxide and molybdenum oxide.

The first electrochromic material may include tungsten oxide.

The first electrochromic material may include a dopant.

The dopant may be at least one selected from the group consisting of aluminum, iron, calcium, magnesium, potassium, sodium, silicon element, copper, manganese, lead, bismuth, antimony, tin, chromium and cobalt.

The first electrochromic material may include the dopant in a content of about 0.1 ppm to about 2000 ppm based on the weight of the first electrochromic material. The first electrochromic material may include the dopant in a content of about 1 ppm to about 1000 ppm based on the weight of the first electrochromic material. The first electrochromic material may include the dopant in a content of about 1 ppm to about 500 ppm based on the weight of the first electrochromic material.

Iron may be included in a content of about 0.1 ppm to about 200 ppm based on the total weight of the first electrochromic material. Iron may be included in a content of about 0.1 ppm to about 100 ppm based on the total weight of the first electrochromic material.

A silicon element may be included in a content of about 0.1 ppm to about 200 ppm based on the total weight of the first electrochromic material. A silicon element may be included in a content of about 0.1 ppm to about 100 ppm based on the total weight of the first electrochromic material.

Copper may be included in a content of about 0.1 ppm to about 200 ppm based on the total weight of the first electrochromic material. Copper may be included in a content of about 0.1 ppm to about 100 ppm based on the total weight of the first electrochromic material.

The first electrochromic material may be represented by Chemical Formula 10 below:

[Chemical Formula 10] $M_xW_yO_z$

where M is at least one selected from the group consisting of aluminum, iron, calcium, magnesium, potassium, sodium, silicon element, copper, manganese, lead, bismuth, antimony, tin, chromium and cobalt, x is 0.0000001 to 0.0001, y is 0.9999 to 1.0001, and z is 0.9997 to 1.0003.

Since the first electrochromic material includes the dopant in the above range, it may have improved electrochromic properties. In addition, since the first electrochromic material includes the dopant in the range, it may have improved long-term durability. In addition, since the first electrochromic material includes the dopant in the above range, it may have improved light resistance.

Tungsten oxide represented by Chemical Formula 10 may be fabricated by the following method. A tungsten ($CaWO_4$) concentrate is subjected to a tungsten extraction and deodorization process by a solvent extraction method to crystallize it to ammonium paratungstate (APT), $5(NH_4)_2O \cdot 2WO_3$), and then decomposed.

In addition, the tungsten oxide represented by Chemical Formula 10 may be prepared by the following method.

The method of preparing the tungsten oxide may include a step of preparing tungsten acid ($H_2WO_4$) while controlling the pH of a mixture of a tungsten concentrate and an inorganic acid to a range of 4 or less; and a step of heat-treating the prepared tungsten acid ($H_2WO_4$) at about 350°C to about 650°C.

As needed, the prepared tungsten acid may be subjected to a step (S30) of removing impurities through filtering. In the filtering step, calcium chloride may be removed.

In addition, in the process of preparing tungsten acid, a metal component for forming the dopant may be added to the inorganic acid.

Accordingly, the tungsten oxide represented by Chemical Formula 1 may be prepared. To implement the method of preparing the tungsten oxide, the invention of Korean Patent Publication No. 10-2016-0101297 may be combined with this embodiment.

Accordingly, a first laminate 11 including the first substrate 100, the first transparent electrode 300 and the first discoloration layer 500 is formed.

Referring to FIG. 7, a second transparent electrode 400 is formed on a second substrate 200.

Next, a second discoloration layer 600 is formed on the second transparent electrode 400.

Referring to FIG. 8, an electrolyte composition for forming an electrolyte layer 700 is coated on the second discoloration layer 600. Accordingly, an electrolyte composition layer 701 is formed on the second discoloration layer 600.

Next, a protective layer 800 is formed on the electrolyte composition layer 701. The protective layer 800 may be a polymer film including a release layer. The protective layer 800 may be a polyethylene terephthalate film including the release layer. The protective layer 800 may protect the electrolyte composition layer 701. In addition, since the protective layer 800 includes the release layer, the protective layer 800 may be easily removed when the electrolyte composition layer 701 is laminated on another layer.

Next, the electrolyte composition layer 701 may be cured or semi-cured.

The electrolyte composition layer 701 may be cured or semi-cured by heat. The electrolyte composition layer 701 may be cured or semi-cured at about 30°C to about 60°C for about 1 minute to about 10 minutes.

The electrolyte composition layer 701 may be cured or semi-cured by light. The electrolyte composition layer 701 may be cured or semi-cured by UV light having a wavelength band of 320 nm to 395 nm and an amount of 500 $mJ/cm^2$ to

1000 mJ/cm$^2$.

Accordingly, a second laminate 12 including the second substrate 200, the second transparent electrode 400, the second discoloration layer 600 and the electrolyte composition layer 701 may be formed. The second laminate 12 may be a structure for forming the electrochromic element according to an embodiment. In addition, the protective layer 800 may be disposed on the second laminate 12. The protective layer 800 may cover the upper surface of the electrolyte composition layer 701.

Prior to the lamination process described below, the first laminate 11 and/or the second laminate 12 may be left for about 60 days or more. For example, the first laminate 11 and/or the second laminate 12 may be transported for about 60 days or more. The first laminate 11 and/or the second laminate 12 may be transported for about 90 days or more. The first laminate 11 and/or the second laminate 12 may be transported for about 120 days or more.

The first laminate 11 and/or the second laminate 12 may be stored or transported for the above period in a rolled state. In addition, the first laminate 11 and/or the second laminate 12 may be stored or transported at room temperature in a humidity state of about 30% to about 60% for the above period.

Referring to FIG. 9, the first laminate 11 and the second laminate 12 are laminated. The first substrate 100, the first transparent electrode 300 and the first discoloration layer 500 are laminated on the electrolyte composition layer 701. Here, the first discoloration layer 500 is brought into direct contact with the electrolyte composition layer 701. In addition, in a state where the protective layer 900 is removed, the first discoloration layer 500 is laminated on the electrolyte composition layer 701.

The lamination process may be performed after the storage and/or transportation periods have elapsed, as described above.

Next, the electrolyte composition layer 701 is cured by light, and a first laminate 11 including the first substrate 100, the first transparent electrode 300 and the first discoloration layer 500, and a second laminate 12 including the second substrate 200, the second transparent electrode 400, the second discoloration layer 600 and the electrolyte layer 700 are laminated to each other. That is, the first laminate 11 and the second laminate 12 may be adhered to each other by the electrolyte layer 700.

In this embodiment, the first laminate 11 and the second laminate 12 may have a transmittance decrease, haze increase, transmittance deviation and driving range deviation in the ranges described above.

FIG. 10 is a sectional view illustrating one cross-section of an electrochromic element according to another embodiment. The description of the preceding embodiment may be combined essentially with the description of this embodiment, except for technically inconsistent parts.

Referring to FIG. 10, the electrochromic element according to an embodiment includes a first laminate 11 and a second laminate 12. The second laminate 12 is disposed on the first laminate 11. The second laminate 12 is laminated on the first laminate 11.

The first laminate 11 includes a first substrate 100, a first transparent electrode 300, a first discoloration layer 500 and an electrolyte layer 700. The second laminate 12 includes a second substrate 200, a second transparent electrode 400 and a second discoloration layer 600.

Together with the second substrate 200, the first substrate 100 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the first substrate 100 and the second substrate 200. Together with the second substrate 200, the first substrate 100 may protect the first transparent electrode 300, the first discoloration layer 500, the second discoloration layer 600, the second transparent electrode 400 and the electrolyte layer 700 from external physical impact and chemical impact.

The second substrate 200 faces the first substrate 100. The second substrate 200 is disposed on the first substrate 100. One end of the second substrate 200 may be disposed to be misaligned with one end of the first substrate 100. The other end of the second substrate 200 may be disposed to be misaligned with the other end of the first substrate 100.

The second substrate 200 supports together with the first substrate 100, the first transparent electrode 300, the first discoloration layer 500, the second discoloration layer 600, the second transparent electrode 400, and the electrolyte layer 700.

In addition, the first transparent electrode 300, the first discoloration layer 500, the second discoloration layer 600, the second transparent electrode 400, and the electrolyte layer 700 are sandwiched between the second substrate 200 and the first substrate 100. Together with the first substrate 100, the second substrate 200 may protect the first transparent electrode 300, the first discoloration layer 500, the second discoloration layer 600, the second transparent electrode 400, and the electrolyte layer 700 from external physical impact and chemical impact.

The first transparent electrode 300 is disposed on the first substrate 100. The first transparent electrode 300 may be deposited on the first substrate 100. In addition, a hard coating layer may be further included between the first

transparent electrode 300 and the first substrate 100.

The second transparent electrode 400 is disposed under the second substrate 200. The second transparent electrode 400 may be deposited on the second substrate 200. In addition, a hard coating layer may be further included between the second transparent electrode 400 and the second substrate 200.

The first discoloration layer 500 is disposed on the first transparent electrode 300. The first discoloration layer 500 may be directly disposed on the upper surface of the first

transparent electrode 300. The first discoloration layer 500 may be electrically directly connected to the first transparent electrode 300.

The first discoloration layer 500 is electrically connected to the first transparent electrode 300. The first discoloration layer 500 may directly access the first transparent electrode 300. In addition, the first discoloration layer 500 is electrically connected to the electrolyte layer 700. The first discoloration layer 500 may be electrically connected to the electrolyte layer 700.

The first discoloration layer 500 may be discolored when supplied with electrons. The first discoloration layer 500 may include a first electrochromic material whose color changes when supplied with electrons. The first electrochromic material may be a reduction-chromic material that changes color upon reduction. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first discoloration layer 500 may include the first electrochromic material in the form of particles. The tungsten oxide, the niobium pentoxide, the vanadium pentoxide, the titanium oxide and the molybdenum oxide may be particles having a particle diameter of about 1nm to about 200 nm. That is, the diameter of the first electrochromic particles included in the first discoloration layer 500 may be about 2 nm to about 150 nm. The diameter of the first electrochromic particles included in the first discoloration layer 500 may be about 5 nm to about 100 nm. The diameter of the first electrochromic particles included in the first discoloration layer 500 may be about 10 nm to about 50 nm.

The first discoloration layer 500 may include the first electrochromic material in a content of about 70 wt% to about 98 wt% based on the total weight of based on the total weight of the first discoloration layer 500. The first discoloration layer 500 may include the first electrochromic material in a content of about 80 wt% to about 96 wt% based on the total weight of the first discoloration layer 500. The first discoloration layer 500 may include the first electrochromic material in a content of about 85 wt% to about 94 wt% based on the total weight of the first discoloration layer 500.

In addition, the first discoloration layer 500 may further include a binder. The binder may be an inorganic binder. The binder may include a silica gel. The binder may be formed by a silica sol containing tetramethoxysilane or methyltrimethoxysilane.

The first discoloration layer 500 may include the binder in a content of about 1 wt% to 20 wt% based on the total weight of the first discoloration layer 500. The first discoloration layer 500 may include the binder in a content of about 2 wt% to 15 wt% based on the total weight of the first discoloration layer 500. The first discoloration layer 500 may include the binder in a content of about 3 wt% to 10 wt% based on the total weight of the first discoloration layer 500.

The haze of the first discoloration layer 500 may be about 0.1% to about 3%. The haze of the first discoloration layer 500 may be about 0.5% to about 2.5%. The haze of the first discoloration layer 500 may be about 1% to about 2%.

The haze of the first discoloration layer 500 may be measured according to ASTM D1003 in a state of being deposited on a glass substrate with a thickness of about 0.7 mm.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may directly access the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. That is, the second electrochromic material may be an oxidization-chromic material. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm. That is, a diameter of second electrochromic particles included in the second discoloration layer 600 may be about 2 nm to about 150 nm. The diameter of the second electrochromic particles may be about 5 nm to about 100 nm. The diameter of the second electrochromic particles may be about 10 nm to about 50 nm.

The second discoloration layer 600 may include the second electrochromic material in a content of about 70 wt% to about 98 wt% based on the total weight of the second discoloration layer 600. The second discoloration layer 600 may include the second electrochromic material in a content of about 80 wt% to about 96 wt% based on the total weight of the

second discoloration layer 600. The second discoloration layer 600 may include the second electrochromic material in a content of about 85 wt% to about 94 wt% based on the total weight of the second discoloration layer 600.

In addition, the second discoloration layer 600 may further include the binder. The binder may be an inorganic binder. The binder may include a silica gel. The binder may be formed by a silica sol containing tetramethoxysilane or methyltrimethoxysilane.

The second discoloration layer 600 may include the binder in a content of about 1 wt% to 20 wt% based on the total weight of the second discoloration layer 600. The second discoloration layer 600 may include the binder in a content of about 2 wt% to 15 wt% based on the total weight of the second discoloration layer 600. The second discoloration layer 600 may include the binder in a content of about 3 wt% to 10 wt% based on the total weight of the first discoloration layer 500.

The haze of the second discoloration layer 600 may be about 0.1% to about 2%. The haze of the second discoloration layer 600 may be about 0.2% to about 1.5%. The haze of the second discoloration layer 600 may be about 0.3% to about 1%.

The haze of the second discoloration layer 600 may be measured according to ASTM D1003 in a state where a glass substrate with a thickness of about 0.7 mm is deposited.

The haze of the second discoloration layer 600 may be smaller than the haze of the first discoloration layer 500. A ratio of the haze of the first discoloration layer 500 to the haze of the second discoloration layer 600 may be about 1.4:1 to about 3:1. The ratio of the haze of the first discoloration layer 500 and the haze of the second discoloration layer 600 may be about 1.6:1 to about 2.5:1.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include cations involved in an electrochromic reaction. The cations may include metal ions. The metal ions may be at least one selected from the group consisting of lithium ions ($Li^+$), sodium ions ($Na^+$) and potassium ions ($K^+$). The cations may be rubidium ions ($Rb^+$) or cesium ions ($Cs^+$).

The electrolyte layer 700 includes a solvent. The solvent may be at least one selected from the group consisting of acetamide, adiponitrile, sulfolane and polyethyleneglycol.

The electrolyte layer 700 may include a metal salt. The metal salt may be at least one selected from the group consisting of $LiClO_4$, $LiBF_4$, $LiAsF_6$, $LiPF_6$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_{2\,N}Li$ and $NaClO_4$.

In addition, the electrolyte layer 700 may include a Cl or F element-containing compound as a metal salt. The electrolyte layer 700 may include one or more metal salts selected from among $LiClO_4$, $LiBF_4$, $LiAsF_6$, $LiPF_6$, LiCl, $LiB_{10}Cl_{10}$, $LiCF_3SO_3$, $LiCF_3CO_2$, $LiAsF_6$, $LiSbF_6$, $LiAlCl_4$, $CF_3SO_3Li$, $(CF_3SO_2)_{2\,N}Li$ and $NaClO_4$.

The electrolyte layer 700 may include a curable resin composition that can be cured by ultraviolet irradiation or heat. The curable resin composition may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocuring initiator and/or a thermal curing initiator.

In more detail, the electrolyte layer 700 may include a curable resin composition. The curable resin composition may have photo-curability and/or thermosetting property.

The curable resin composition may include an acrylate copolymer.

The acrylate copolymer may be at least one selected from the group consisting of urethane acrylate and epoxy acrylate.

The molecular weight of the urethane acrylate may be about 3000 g/mol to about 50000 g/mol. The molecular weight of the urethane acrylate may be about 5000 g/mol to about 50000 g/mol.

The urethane acrylate may include an ether-based urethane acrylate.

The ether-based urethane acrylate may include a first polyol, a diisocyanate and an acrylate. The ether-based urethane acrylate may be formed by reacting with the polyether diol, the diisocyanate and the acrylate.

The ether-based urethane acrylate may include a first polyol having a molecular weight of about 100 g/mol to about 1000 g/mol; a first diisocyanate having a molecular weight of about 100 g/mol to about 1000 g/mol; and a first acrylate having a molecular weight of about 50 g/mol to about 500 g/mol.

The first polyol may have a molecular weight of about 100 g/mol to about 1000 g/mol. The first polyol may have a molecular weight of about 200 g/mol to about 1000 g/mol. The first polyol may have a molecular weight of about 200 g/mol to about 700 g/mol.

The first polyol may include polyether diol.

The first polyol may include poly(tetramethylene ether)diol.

The ether-based urethane acrylate may include the first polyol in a content of about 60 mol parts to about 100 mol parts based on 100 mol parts of the first diisocyanate. The ether-based urethane acrylate may include the first polyol in a content of about 65 mol parts to about 95 mol parts based on 100 mol parts of the first diisocyanate. The ether-based

urethane acrylate may include the first polyol in a content of about 70 mol parts to about 90 mol parts based on 100 mol parts of the first diisocyanate.

The first diisocyanate may have a molecular weight of about 100 g/mol to about 1000 g/mol.

The first diisocyanate may be one or more selected from the group consisting of isophorone diisocyanate, toluene diisocyanate, hexamethylene diisocyanate and methylene diphenyl diisocyanate.

The first diisocyanate may be an isophorone diisocyanate.

The first diisocyanate may be included in a content of about 30 mol% to about 70 mol% in the ether-based urethane acrylate based on the total mole number of the ether-based urethane acrylate. The diisocyanate may be included in a content of about 40 mol% to about 60 mol% in the ether-based urethane acrylate based on the total mole number of the ether-based urethane acrylate.

The first acrylate may have a molecular weight of about 50 g/mol to about 500 g/mol.

The first acrylate may include a monoacrylate.

The first acrylate may be at least one selected from the group consisting of 2-hydroxyethyl acrylate and 2-hydroxypropyl acrylate methacrylate.

The ether-based urethane acrylate may include the first acrylate in a content of about 20 mol parts to about 40 mol parts based on 100 mol parts of the first diisocyanate. The ether-based urethane acrylate may include the first acrylate in a content of about 23 mol parts to about 37 mol parts based on 100 mol parts of the first diisocyanate. The ether-based urethane acrylate may include the first acrylate in a content of about 25 mol parts to about 35 mol parts based on 100 mol parts of the first diisocyanate.

The ether-based urethane acrylate may have a weight average molecular weight of about 1000 g/mol to about 100000 g/mol. The weight average molecular weight of the ether-based urethane acrylate may be about 2000 g/mol to about 70000 g/mol. The weight average molecular weight of the ether-based urethane acrylate may be about 5000 g/mol to about 50000 g/mol.

The ether-based urethane acrylate may include a second diisocyanate, a second polyol and a second acrylate.

The second diisocyanate may include an aliphatic diisocyanate.

The second diisocyanate may be at least one selected from the group consisting of hexamethylene diisocyanate, toluene diisocyanate, dicyclohexylmethane-4,4'-diisocyanate (H12MDI) and methylene diphenyl diisocyanate.

The second diisocyanate may be included in a content of about 20 mol% to about 60 mol% in the ether-based urethane acrylate based on 100 mol% of the ether-based urethane acrylate. The second diisocyanate may be included in a content of about 30 mol% to about 50 mol% in the ether-based urethane acrylate based on 100 mol% of the ether-based urethane acrylate.

The second polyol may include a polyester diol or a polycaprolactone diol.

A weight average molecular weight of the polycaprolactone diol may be about 100 g/mol to about 1000 g/mol. The weight average molecular weight of the polycaprolactone diol may be about 100 g/mol to about 800 g/mol. The weight average molecular weight of the polycaprolactone diol may be about 200 g/mol to about 800 g/mol.

The second acrylate may be at least one selected from the group consisting of 2-hydroxyethyl acrylate and 2-hydroxypropyl acrylate methacrylate.

The molecular weight of the ether-based urethane acrylate may be about 3000 g/mol to about 50000 g/mol. The molecular weight of the ether-based urethane acrylate may be about 5000 g/mol to about 50000 g/mol.

A viscosity of the urethane acrylate at about 25°C may be about 10000 cPs to about 100000 cPs. A viscosity of the urethane acrylate at about 60°C may be about 1000 cPs to about 8000 cPs.

The urethane acrylate is commercially available. The urethane acrylate may be at least one selected from the group consisting of, for example, Miramer PU210, Miramer PU256, Miramer PU2050, Miramer PU2100, Miramer PU2300C, Miramer PU2560, Miramer PU320, Miramer PU340, Miramer PU3000, Miramer PU3200, Miramer PU3450, Miramer PU5000, Miramer PU610, Miramer MU9500, Miramer MU9800, Miramer SC2154, Miramer SC2404 or Miramer SC2565 among MIWON Co.'s products.

The acrylate copolymer may include an epoxy acrylate.

The epoxy acrylate may be formed by reacting an epoxy compound and acrylate. A molar ratio of the epoxy compound to the acrylate may be about 1:1.5 to about 1:3.5.

The epoxy compound may be at least one selected from the group consisting of glycerol diglycidyl ether, a bisphenol A epoxy compound, a bisphenol F epoxy compound and a novolac epoxy compound.

The acrylate may be at least one selected from the group consisting of 2-carboxyethyl acrylate, 2-hydroxyethyl acrylate and acrylic acid.

The epoxy acrylate may have a weight average molecular weight of about 200 g/mol to about 3000 g/mol. The epoxy acrylate may have a weight average molecular weight of about 500 g/mol to about 2000 g/mol. The epoxy acrylate may have a weight average molecular weight of about 500 g/mol to about 2000 g/mol.

The epoxy acrylate may have a viscosity of about 100 cPs to about 5000 cPs at about 25°C. The epoxy acrylate may have a viscosity of about 100 cPs to about 5000 cPs at about 25°C. The epoxy acrylate may have a viscosity of about

1000 cPs to about 4000 cPs at about 25°C.

In addition, the epoxy acrylate may have a viscosity of about 3000 cPs to about 8000 cPs at about 40°C.

In addition, the epoxy acrylate may have a viscosity of about 200 cPs to about 6000 cPs at about 60°C.

The epoxy acrylate is commercially available. The epoxy acrylate may be at least one selected from the group consisting of, for example, Miramer PE210, Miramer PE250, Miramer SC6300, Miramer SC6400, Miramer PE110H, Miramer PE230, Miramer PE310, Miramer EA2235, Miramer EA2255, Miramer EA2259 or Miramer EA2280 among MIWON Co.'s products.

The curable resin composition may further include a multifunctional acrylate monomer.

The multifunctional acrylate monomer may include a difunctional acrylate or a trifunctional acrylate.

The multifunctional acrylate monomer may include two or more functional groups. The multifunctional acrylate monomer may be a monomer including two or more functional acrylate groups. The multifunctional acrylate monomer may be an aliphatic compound including three acrylates.

The multifunctional acrylate monomer may be at least one selected from the group consisting of trimethylolpropane triacrylate, trimethylolpropane (ethylene oxide)$_3$ triacrylate (trimethylolpropane (EO)$_3$ triacrylate), trimethylolpropane (ethylene oxide)$_6$ triacrylate (trimethylolpropane (EO)$_6$ triacrylate), trimethylolpropane (ethylene oxide)$_9$ triacrylate (trimethylolpropane (EO)$_9$ triacrylate), trimethylolpropane (ethylene oxide)$_{15}$ triacrylate (trimethylolpropane (EO)$_{15}$ triacrylate), glycerin (propylene oxide)$_3$ triacrylate (glycerine (PO)$_3$ triacrylate) and pantaerythritol triacrylate.

The multifunctional acrylate monomer may have a molecular weight of about 200 to about 800. The multifunctional acrylate monomer may have a molecular weight of about 200 to about 400.

The multifunctional acrylate monomer may have a viscosity of about 20 cps to about 300 cps at about 25°C.

The multifunctional acrylate monomer may be included in a content of about 5 wt% to about 30 wt% in the curable resin composition based on the total weight of the curable resin composition. The multifunctional acrylate monomer may be included in a content of about 10 wt% to about 25 wt% in the curable resin composition based on the total weight of the curable resin composition. The multifunctional acrylate monomer may be included in a content of about 13 wt% to about 23 wt% in the curable resin composition based on the total weight of the curable resin composition.

The curable resin composition may include a monofunctional acrylate monomer. The monofunctional acrylate monomer may be a monomer including one functional acrylate group. The monofunctional acrylate monomer may be an aromatic compound including one functional acrylate group.

The monofunctional acrylate monomer may be at least one selected from the group consisting of caprolactone acrylate, cyclic trimethylolpropane formal acrylate, phenoxy benzyl acrylate, 3,3,5-trimethyl cyclohexyl acrylate, isobornyl acrylate, o-phenylphenol EO acrylate, 4-tert-butylcyclohexyl acrylate, benzyl acrylate, biphenylmethyl acrylate, lauryl acrylate, isodecyl acrylate, phenol(ethylene oxide) acrylate (phenol(EO) acrylate), phenol(ethylene oxide)$_2$ acrylate (phenol(EO)$_2$ acrylate), phenol(ethylene oxide) acrylate (phenol(EO)$_4$ acrylate) and tetra hydrofurfuryl acrylate.

In addition, the molecular weight of the monofunctional acrylate monomer may be about 150 to about 800. The molecular weight of the monofunctional acrylate monomer may be about 200 to about 400.

In addition, a viscosity of the monofunctional acrylate monomer at about 25°C may be about 10 cps to about 60 cps.

The monofunctional acrylate monomer may be included in a content of about 5 wt% to about 20 wt% in the curable composition based on the weight of the curable composition. The monofunctional acrylate monomer may be included in a content of about 5 wt% to about 10 wt% in the curable composition based on the weight of the curable composition. The monofunctional acrylate monomer may be included in a content of about 10 wt% to about 15 wt% in the curable composition based on the total weight of the curable composition.

The curable composition may include acrylate including a thermosetting functional group. That is, the acrylate including a thermosetting functional group may have both thermosetting property and photo-curability.

The thermosetting acrylate may be at least one selected from the group consisting of urethane acrylate including a thermosetting functional group, epoxy acrylate including a thermosetting functional group, ester-based acrylate including a thermosetting functional group and ether-based acrylate including a thermosetting functional group.

The thermosetting acrylate may include a carboxyl group. The thermosetting acrylate may be at least one of compounds represented by Chemical Formulas 1 to 9 above.

The thermosetting acrylate may be included in a content of about 1 wt% to about 10 wt% in the curable resin composition based on the total weight of the curable resin composition. The thermosetting acrylate may be included in a content of about 0.5 wt% to about 5 wt% in the curable resin composition based on the total weight of the curable resin composition. The thermosetting acrylate may be included in a content of about 2 wt% to about 8 wt% in the curable resin composition based on the total weight of the curable resin composition.

Since the curable resin composition includes the thermosetting acrylate, a coating layer of the electrolyte composition that is coated with an electrolyte composition including the curable resin composition may be easily cured or semi-cured.

Accordingly, the coating layer of the electrolyte composition may be effectively protected against external

physical and chemical impacts.

The curable resin composition may further include a photocurable initiator.

The photoinitiator may be one or more selected from the group consisting of benzophenone-based photoinitiators, thioxanthone-based photoinitiators, α-hydroxy ketone-based photoinitiators, ketone-based photoinitiators, phenyl glyoxylate-based photoinitiators and acryl phosphine oxide-based photoinitiators.

The photoinitiator may be included in a content of about 0.1 wt% to about 5 wt% in the curable resin composition based on the total weight of the curable resin composition.

The photocurable resin composition may include a first photoinitiator and second photoinitiator that operate in different wavelength bands.

Specifically, the curable resin composition may include a first photoinitiator operating in a wavelength band of 208 nm to 295 nm; and a second photoinitiator operating in a wavelength band of 320 nm to 395 nm.

An operating wavelength band of the first photoinitiator may be 208 nm to 275 nm, or 208 nm to 245 nm, and an operating wavelength band of the second photoinitiator may be 330 nm to 390 nm, or 340 nm to 385 nm.

As a specific example, the first photoinitiator may generate radicals by UV light having a wavelength band of 208 nm to 295 nm and an amount of 100 $mJ/cm^2$ to 200 $mJ/cm^2$. In addition, the second photoinitiator may be decomposed and generate radicals by UV light having a wavelength band of 320 nm to 395 nm and an amount of 500 $mJ/cm^2$ to 1000 $mJ/cm^2$.

The first photoinitiator may be, for example, a ketone-based photoinitiator, and may have one or more aromatic groups or alicyclic groups. A specific example of the first photoinitiator includes hydroxycyclohexylphenyl ketone.

The second photoinitiator may be, for example, a phosphine-based photoinitiator, and may have one or more aromatic groups. A specific example of the second photoinitiator includes 2,4,6-trimethylbenzoyldiphenylphosphine.

Since the curable resin composition includes the first photoinitiator and the second photoinitiator, a coating layer of the electrolyte composition which is coated with an electrolyte composition including the curable resin composition may be easily cured or semi-cured. That is, ultraviolet rays of a specific wavelength may be used, and the coating layer of the electrolyte composition may be easily cured or semi-cured.

Accordingly, the coating layer of the electrolyte composition may be effectively protected against external physical and chemical impacts.

The electrolyte layer 700 may further include an antioxidant.

The antioxidant may be at least one selected from the group consisting of phenol-based antioxidants, sulfur-based antioxidants, amine-based antioxidants, polyimide-based antioxidants and phosphorus-based antioxidants.

The antioxidant may be included in a content of 0.1 wt% to about 5 wt% in the electrolyte layer 700 based on the total weight of the electrolyte layer 700. The antioxidant may be included in a content of about 0.1 wt% to about 3 wt% in the electrolyte layer 700.

Since the electrolyte layer 700 includes the antioxidant, it may be easily protected from chemical shocks such as external oxygen. Accordingly, the electrolyte layer 700 may have a constant transmittance even if left for a long time.

The thickness of the electrolyte layer 700 may be about 10 μm to about 200 μm The thickness of the electrolyte layer 700 may be about 50 μm to about 150 μm.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm or a wavelength of 550 nm. The transmittance may be measured using a known haze meter (HM).

The haze of the electrolyte layer 700 may be about 0.01% to about 2%. The haze of the electrolyte layer 700 may be about 0.05% to about 1%. The haze of the electrolyte layer 700 may be about 0.05% to about 0.7%.

The haze of the electrolyte layer 500 may be measured according to ASTM D1003 in a state of being deposited on a glass substrate having a thickness of about 0.7 mm.

The electrochromic element according to an embodiment may be fabricated by the following method. FIGS. 11 to 14 are sectional views illustrating a process of fabricating the electrochromic element according to an embodiment.

Referring to FIG. 11, a first transparent electrode 300 is formed on a first substrate 100. The first transparent electrode 300 may be formed by a vacuum deposition process. A metal oxide such as indium tin oxide may be deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that a layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. A first sol solution including a first electrochromic

material, a binder and a solvent may be coated on the layer of the first transparent electrode 300. A sol-gel reaction may occur in the coated first sol solution, and the first discoloration layer 500 may be formed.

The first sol solution may include the first discoloration material in a content of about 5 wt% to about 30 wt% in the form of particles. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Referring to FIG. 12, an electrolyte composition for forming an electrolyte layer 700 is coated on the first discoloration layer 500. Accordingly, an electrolyte composition layer 701 is formed on the first discoloration layer 500.

The electrolyte composition may include the solvent, metal salt and curable resin composition as described above. In addition, the electrolyte composition may further include an additional additive such as the antioxidant.

Next, a protective layer 900 is formed on the electrolyte composition layer 701. The protective layer 900 may be a polymer film including a release layer. The protective layer 900 may be a polyethylene terephthalate film including the release layer. The thickness of the polyethylene terephthalate film may be about 30 μm to about 100 μm. The protective layer 900 may protect the electrolyte composition layer 701. In addition, since the protective layer 900 includes the release layer, the protective layer 900 may be easily removed when the electrolyte composition layer 701 is laminated on another layer.

Next, the electrolyte composition layer 701 may be cured or semi-cured.

The electrolyte composition layer 701 may be cured or semi-cured by heat. The electrolyte composition layer 701 may be cured or semi-cured at about 30°C to about 60°C for about 1 minute to about 10 minutes.

The electrolyte composition layer 701 may be cured or semi-cured by light. The electrolyte composition layer 701 may be cured or semi-cured by UV light having a wavelength band of 320 nm to 395 nm and an amount of 500 $mJ/cm^2$ to 1000 $mJ/cm^2$.

Accordingly, a first laminate 11 including the first substrate 100, the first transparent electrode 300, the first discoloration layer 500 and the electrolyte composition layer 701 may be formed. The first laminate 11 has a structure for fabricating the electrochromic element according to an embodiment. In addition, the protective layer 900 may be disposed on the first laminate 11. The protective layer 900 may cover the upper surface of the electrolyte composition layer 701.

The upper surface of the first discoloration layer 500 may have an Rz roughness of 0.3 μm to 3 μm. In addition, since the electrolyte composition has appropriate composition and properties as described above, the optical properties of the first laminate 11 may be improved. In particular, since the upper surface of the first discoloration layer 500 and the electrolyte composition have the characteristics described above, the overall haze may be reduced when the electrolyte composition is coated on the upper surface of the first discoloration layer 500. A value obtained by subtracting the haze of the first laminate 11 from the sum of the haze of the first discoloration layer 500 and the haze of the electrolyte composition layer 701 may be greater than 0. A value obtained by subtracting the haze of the first laminate 11 from the sum of the haze of the first discoloration layer 11 and the haze of the electrolyte composition layer 701 may be 0.001% to 2%.

Accordingly, the electrolyte composition layer 701 may have a low haze.

Referring to FIG. 13, a second transparent electrode 400 is formed on a second substrate 200.

The second transparent electrode 400 may be formed by a vacuum deposition process. A conductive metal oxide such as indium tin oxide may be deposited on the second substrate 200 by a sputtering process, etc., so that the second transparent electrode 400 may be formed.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the second transparent electrode 400. The second discoloration layer 600 may be formed by a sol-gel coating process. A second sol solution including a second electrochromic material, a binder and a solvent may be coated on the second transparent electrode 400. A sol-gel reaction may occur in the coated second sol solution, and the second discoloration layer 600 may be formed.

The second sol solution may include the second discoloration material in the form of particles in a content of about

5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

Accordingly, a second laminate 12 including the second substrate 200, the second transparent electrode 400 and the second discoloration layer 600 is formed. The second laminate 12 may be a structure for forming the electrochromic element according to an embodiment. In addition, a release liner film for protecting the second discoloration layer 600 may be further disposed on the second discoloration layer 600.

Prior to the lamination process described below, the first laminate 11 may be left for about 60 days or more. For example, the first laminate 11 may be transported for about 60 days or more. The first laminate 11 may be transported for about 90 days or more. The first laminate 11 may be transported for about 120 days or more.

The first laminate 11 may be stored or transported for the above period in a rolled state. In addition, the first laminate 11 may be stored or transported at room temperature and a humidity state of about 30% to about 60% for the above period or longer.

In addition, prior to the lamination process described below, the second laminate 12 may be left for about 60 days or more. For example, the second laminate 12 may be transported for about 60 days or more. The second laminate 12 may be transported for about 90 days or more. The second laminate 12 may be transported for about 120 days or more.

The second laminate 12 may be stored or transported for the above period in a rolled state. In addition, the second laminate 12 may be stored or transported at room temperature and a humidity state of about 30% to about 60% for the above period.

Referring to FIG. 14, the second substrate 200, the second transparent electrode 400 and the second discoloration layer 600 are laminated on the electrolyte composition layer 701. Here, the second discoloration layer 600 is brought into direct contact with the electrolyte composition layer 701. In addition, the protective layer 900 is removed, and the second discoloration layer 600 is laminated on the electrolyte composition layer 701.

The lamination process may be performed after the above period has elapsed.

Next, the electrolyte composition layer 701 is cured by light, and a first laminate 11 including the first substrate 100, the first transparent electrode 300 and the first discoloration layer 500 and a second laminate 12 including the second substrate 200, the second transparent electrode 400 and the second discoloration layer 600 are laminated to each other. That is, the first laminate 11 and the second laminate 12 may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, the light transmittance may mean a total light transmittance.

The light transmittance of the electrochromic element may be about 70% to about 90%. The light transmittance of the electrochromic element may be about 75% to about 88%. The light transmittance of the electrochromic element may be about 78% to about 86%. The light transmittance of the electrochromic element may be about 65% to about 80%.

The electrochromic element according to an embodiment may have a third haze of about 5% or less. The third haze of the electrochromic element according to an embodiment may be about 0.1% to about 5%. The third haze of the electrochromic element according to an embodiment may be about 0.199% to about 4.999%. The third haze of the electrochromic element according to an embodiment may be about 0.5% to about 4.5%. The third haze of the electrochromic element according to an embodiment may be about 1% to about 4%.

The first laminate 11 may have a first haze of about 0.1% to about 3%. The first laminate 11 may have a first haze of about 0.5% to about 2.5%. The first laminate 11 may have a first haze of about 1% to about 2%.

The second laminate 12 may have a second haze of about 0.1% to about 2%. The second laminate 12 may have a second haze of about 0.3% to about 1.5%. The second laminate 12 may have a second haze of about 0.5% to about 1%.

The electrochromic element according to an embodiment may have a decrease in its haze. The haze decrease is a value obtained by subtracting the third haze from the sum of the first haze and the second haze. That is, the haze decrease may be a haze reduced as the first laminate 11 and the second laminate 12 are laminated and the electrochromic element according to an embodiment is fabricated.

The haze decrease may be derived according to Equation 1 below.

[Equation 1]

$$\text{Haze decrease} = (\text{First haze} + \text{Second haze}) - \text{Third haze}$$

In the electrochromic element according to an embodiment, The haze decrease may be greater than 0. The haze decrease may be about 0.001% to about 3%. The haze decrease may be 0.01% to about 3%. The haze decrease may be 0.1% to about 3%. The haze decrease may be 0.5% to about 3%. The haze decrease may be about 1% to about 3%.

The upper surface of the second discoloration layer 600 may have an Rz roughness of about 0.1 μm to about 2 μm. In addition, since the electrolyte composition layer 701 has the composition and properties described above, the haze of the entire layers may be reduced after a lamination process, as described above. That is, since the electrolyte composition layer 701 appropriately covers the surface of the second discoloration layer 600, the electrochromic element according to an embodiment may have a low haze.

The electrochromic element according to yet another embodiment may be fabricated by the following method. FIGS. 15 to 18 are sectional views illustrating a process of fabricating an electrochromic element according to yet another embodiment.

Referring to FIG. 15, a first transparent electrode 300 is formed on a first substrate 100.

Next, a first discoloration layer 500 is formed on the layer of the first transparent electrode 300. The first discoloration layer 500 may be formed by a sol-gel coating process. The first sol solution including a first electrochromic material, a binder and a solvent may be coated on the layer of the first transparent electrode 300. A sol-gel reaction may occur in the coated first sol solution, and the first discoloration layer 500 may be formed.

The first electrochromic material may include at least one selected from the group consisting of tungsten oxide, niobium pentoxide, vanadium pentoxide, titanium oxide and molybdenum oxide.

The first electrochromic material may include tungsten oxide.

The first electrochromic material may include a dopant.

The dopant may be at least one selected from the group consisting of aluminum, iron, calcium, magnesium, potassium, sodium, silicon element, copper, manganese, lead, bismuth, antimony, tin, chromium and cobalt.

The first electrochromic material may include the dopant in a content of about 0.1 ppm to about 2000 ppm based on the weight of the first electrochromic material. The first electrochromic material may include the dopant in a content of about 1 ppm to about 1000 ppm based on the weight of the first electrochromic material. The first electrochromic material may include the dopant in a content of about 1 ppm to about 500 ppm based on the weight of the first electrochromic material.

Iron may be included in a content of about 0.1 ppm to about 200 ppm based on the total weight of the first electrochromic material. Iron may be included in a content of about 0.1 ppm to about 100 ppm based on the total weight of the first electrochromic material.

A silicon element may be included in a content of about 0.1 ppm to about 200 ppm based on the total weight of the first electrochromic material. A silicon element may be included in a content of about 0.1 ppm to about 100 ppm based on the total weight of the first electrochromic material.

Copper may be included in a content of about 0.1 ppm to about 200 ppm based on the total weight of the first electrochromic material. Copper may be included in a content of about 0.1 ppm to about 100 ppm based on the total weight of the first electrochromic material.

The first electrochromic material may be represented by Chemical Formula 10 below:

[Chemical Formula 10] $M_xW_yO_z$

where M is at least one selected from the group consisting of aluminum, iron, calcium, magnesium, potassium, sodium, silicon element, copper, manganese, lead, bismuth, antimony, tin, chromium and cobalt, x is 0.0000001 to 0.0001, y is 0.9999 to 1.0001, and z is 0.9997 to 1.0003.

Since the first electrochromic material includes the dopant in the above range, it may have improved electrochromic properties. In addition, since the first electrochromic material includes the dopant in the range, it may have improved long-term durability. In addition, since the first electrochromic material includes the dopant in the above range, it may have improved light resistance.

Tungsten oxide represented by Chemical Formula 10 may be fabricated by the following method. A tungsten ($CaWO_4$) concentrate is subjected to a tungsten extraction and deodorization process by a solvent extraction method to crystallize it to ammonium paratungstate (APT), $5(NH_4)_2O{\cdot}2WO_3$), and then decomposed.

In addition, the tungsten oxide represented by Chemical Formula 10 may be prepared by the following method.

The method of preparing the tungsten oxide may include a step of preparing tungsten acid ($H_2WO_4$) while controlling the pH of a mixture of a tungsten concentrate and an inorganic acid to a range of 4 or less; and a step of heat-treating the prepared tungsten acid ($H_2WO_4$) at about 350°C to about 650°C.

As needed, the prepared tungsten acid may be subjected to a step (S30) of removing impurities through filtering. In the filtering step, calcium chloride may be removed.

In addition, in the process of preparing tungsten acid, a metal component for forming the dopant may be added to the inorganic acid.

Accordingly, the tungsten oxide represented by Chemical Formula 1 may be prepared. To implement the method of preparing the tungsten oxide, the invention of Korean Patent Publication No. 10-2016-0101297 may be combined with this embodiment.

Accordingly, a first laminate 11 including the first substrate 100, the first transparent electrode 300 and the first discoloration layer 500 is formed.

Referring to FIG. 16, a second transparent electrode 400 is formed on a second substrate 200.

Next, a second discoloration layer 600 is formed on the second transparent electrode 400.

Referring to FIG. 17, an electrolyte composition for forming an electrolyte layer 700 is coated on the second discoloration layer 600. Accordingly, an electrolyte composition layer 701 is formed on the second discoloration layer 600.

Next, a protective layer 800 is formed on the electrolyte composition layer 701. The protective layer 800 may be a polymer film including a release layer. The protective layer 800 may be a polyethylene terephthalate film including the release layer. The protective layer 800 may protect the electrolyte composition layer 701. In addition, since the protective layer 800 includes the release layer, the protective layer 800 may be easily removed when the electrolyte composition layer 701 is laminated on another layer.

Next, the electrolyte composition layer 701 may be cured or semi-cured.

The electrolyte composition layer 701 may be cured or semi-cured by heat. The electrolyte composition layer 701 may be cured or semi-cured at about 30°C to about 60°C for about 1 minute to about 10 minutes.

The electrolyte composition layer 701 may be cured or semi-cured by light. The electrolyte composition layer 701 may be cured or semi-cured by UV light having a wavelength band of 320 nm to 395 nm and an amount of 500 $mJ/cm^2$ to 1000 $mJ/cm^2$.

Accordingly, a second laminate 12 including the second substrate 200, the second transparent electrode 400, the second discoloration layer 600 and the electrolyte composition layer 701 may be formed. The second laminate 12 may be a structure for forming the electrochromic element according to an embodiment. In addition, the protective layer 800 may be disposed on the second laminate 12. The protective layer 800 may cover the upper surface of the electrolyte composition layer 701.

Prior to the lamination process described below, the first laminate 11 and/or the second laminate 12 may be left for about 60 days or more. For example, the first laminate 11 and/or the second laminate 12 may be transported for about 60 days or more. The first laminate 11 and/or the second laminate 12 may be transported for about 90 days or more. The first laminate 11 and/or the second laminate 12 may be transported for about 120 days or more.

The first laminate 11 and/or the second laminate 12 may be stored or transported for the above period in a rolled state. In addition, the first laminate 11 and/or the second laminate 12 may be stored or transported at room temperature in a humidity state of about 30% to about 60% for the above period.

Referring to FIG. 18, the first laminate 11 and the second laminate 12 are laminated. The first substrate 100, the first transparent electrode 300 and the first discoloration layer 500 are laminated on the electrolyte composition layer 701. Here, the first discoloration layer 500 is brought into direct contact with the electrolyte composition layer 701. In addition, in a state where the protective layer 900 is removed, the first discoloration layer 500 is laminated on the electrolyte composition layer 701.

The lamination process may be performed after the storage and/or transportation periods have elapsed, as described above.

Next, the electrolyte composition layer 701 is cured by light, and a first laminate 11 including the first substrate 100, the first transparent electrode 300 and the first discoloration layer 500, and a second laminate 12 including the second substrate 200, the second transparent electrode 400, the second discoloration layer 600 and the electrolyte layer 700 are laminated to each other. That is, the first laminate 11 and the second laminate 12 may be adhered to each other by the electrolyte layer 700.

In this embodiment, the first laminate 11 and the second laminate 12 may have a haze decrease in the above-described range.

In the method of fabricating the electrochromic element according to an embodiment, the haze decrease is greater than 0. Accordingly, the electrochromic element according to an embodiment may reduce, rather than increase, the overall haze in the lamination process of the first laminate 11 and the second laminate 12.

The method of fabricating the electrochromic element according to an embodiment may appropriately adjust the composition and properties of the electrolyte layer 700, thereby reducing the hazes of the first discoloration layer 500 and/or the second discoloration layer 600.

Accordingly, the electrochromic element according to an embodiment may have a low haze.

In particular, when the first discoloration layer 500 and the second discoloration layer 600 have high color change characteristics, they may have a high haze. That is, the first discoloration layer 500 and the second discoloration layer 600 may have low optical properties when implementing improved color change characteristics.

Since the electrochromic element according to an embodiment has an appropriate haze decrease as described above, it may have improved optical properties while having improved color change characteristics.

FIG. 19 illustrates a window device 1 according to an embodiment.

Referring to FIG. 19, the window device 1 according to an embodiment includes the electrochromic element 10, a frame 20, windows 31, 32 and 33, a plug-in component 40 and a power supply 50.

The frame 20 may be composed of one or more pieces. For example, the frame 20 may be composed of one or more materials, e.g., vinyl, PVC, aluminum (Al), steel, or fiberglass. The frame 20 fixes the windows 31, 32 and 33 and seals the spaces between the windows 31, 32 and 33.

In addition, the frame 20 may hold or include foam or pieces made of other materials. The frame 20 includes a spacer, and the spacer may be disposed between adjacent windows 31, 32 and 33. In addition, the spacer may tightly seal the spaces between the windows 31, 32 and 33, together with an adhesive sealant.

The windows 31, 32 and 33 are fixed to the frame 20. The windows 31, 32 and 33 may be glass pane. The windows 31, 32 and 33 may be general silicon oxide (SOx)-based glass substrates such as soda lime glass or float glass composed of about 75% silica ($SiO_2$) plus $Na_2O$, CaO, and some minor additives. However, any material having appropriate optical, electrical, thermal, and mechanical properties may be used. The windows 31, 32 and 33 may also include, for example, other glass materials, plastics and thermoplastic resins (e.g., poly(methyl methacrylate), polystyrene, a polycarbonate, allyl diglycol carbonate, SAN (styrene acrylonitrile copolymer), poly(4-methyl-1-pentene), polyester, polyamide), or mirror materials. The windows 31, 32 and 33 may include tempered glass.

The windows 31, 32 and 33 may include a first window 31, a second window 32 and a third window 33. The first window 3first and the third window 33 may be disposed at the outermost side, and the second window 32 may be disposed between the first window 3first and the third window 33.

The electrochromic element 10 is disposed between the first window 3first and the second window 32. The electrochromic element 10 may be laminated to the first window 3first and the second window 32.

The electrochromic element 10 may be laminated to the first window 3first by a first polyvinyl butyral sheet. That is, the first polyvinyl butyral sheet may be disposed on the first window 3first and the electrochromic element 10, and may be laminated to the first window 3first and the electrochromic element 10.

The electrochromic element 10 may be laminated to the second window 32 by a second polyvinyl butyral sheet. That is, the second polyvinyl butyral sheet may be disposed on the second window 32 and the electrochromic element 10 and may be laminated to the second window 32 and the electrochromic element 10.

A space 60 may be formed between the second window 32 and the third window 33. The space may be filled with one or more gases, such as argon (Ar), krypton (Kr), or xenon (Xn).

The windows 31, 32 and 33 may have glass pane sizes for residential or commercial window applications. The size of glass pane may vary widely depending on the specific needs of the home or commercial enterprise. In some embodiments, the windows 31, 32 and 33 may be formed of architectural glass. Architectural glass is typically used in commercial buildings, but can also be used in residential buildings. Normally, but not necessarily, the indoor environment is separated from the outdoor environment. In some embodiments, a suitable architectural glass substrate is at least about 20 inches by about 20 inches, and may be much larger, for example, about 80 inches by about 120 inches, or larger. Architectural glass is typically at least about 2 millimeters (mm) thick and may be as thick as 6 mm or more.

In embodiments, the windows 31, 32 and 33 have a thickness in a range of about 1 mm to about 10 mm.

In embodiments, the windows 31, 32 and 33 may be, for example, very thin and flexible Gorilla Glass® or WillowTM Glass which is commercially available from Corning, Inc. in New York. The thicknesses of these glasses may be less than 0.3 mm or less than about 1 mm.

The plug-in component 40 may include a first electrical input 41, a second electrical input 42, a third electrical input 43, a fourth electrical input 44 and a fifth electrical input 45.

In addition, the power supply 50 includes a first power terminal 51 and a second power terminal 52.

The first electrical input 41 is electrically connected to the first power terminal 51 through one or more wires or other electrical connections, components, or devices.

The first electrical input 41 may include a pin, a socket, or another electrical connector or conductor. In addition, the first electrical input 41 may be electrically connected to the electrochromic element 10 through a first bus bar (not shown). The first bus bar may be electrically connected to the second transparent electrode 400.

The second electrical input 42 is electrically connected to the second power terminal 52 through one or more wires or other electrical connections, components, or devices.

The second electrical input 42 may include a pin, a socket, or another electrical connector or conductor. In addition, the second electrical input 42 may be electrically connected to the electrochromic element 10 through a second bus bar (not shown). The second bus bar may be electrically connected to the first transparent electrode 300.

The third electrical input 43 may be coupled to a device, system, or building ground.

The fourth electrical input 44 and the fifth electrical input 45 may be individually used, for example, for communication between a controller or microcontroller for controlling the window device 1 and a network controller.

The power supply 50 supplies power to the electrochromic element 10 through the plug-in component 40. In addition, the power supply 50 may be controlled by the controller outside to supply power of a certain waveform to the electrochromic element 10.

In addition, the features, structures, effects, and the like described in the embodiments are included in at least one embodiment of the present invention, and are not necessarily limited to only one embodiment. Furthermore, the features,

structures, effects and the like illustrated in the embodiments can be combined and modified by those skilled in the art to which the embodiments belong. Therefore, it should be understood that the combined and modified embodiments are included in the present invention.

Although the above description focuses on embodiments, these are only examples and do not limit the present invention, and those with ordinary knowledge in the field to which the present invention pertains will be able to recognize that various modifications and applications not exemplified above are possible without departing from the essential characteristics of the present invention. For example, each component specifically shown in the embodiments can be modified and implemented, and the differences related to such modifications and applications should be interpreted as being included in the scope of the present invention defined in the appended claims.

Fabrication examples

ITO film : Hansung Industrial Co., Ltd., HI150-ABE-125A-AB
Tungsten oxide powder : Adcro Co., Ltd., ELACO-W
Nickel oxide powder : Adcro Co., Ltd., ELACO-P
Solvent : acetamide (AA), adiponitrile (AN), sulfolane (SF)
Lithium salt: $LiClO_4$
Urethane acrylate #1

About 4 mol parts of hexamethylene diisocyanate and about 6 mol parts of polyester polyol (Union Chemical Co., U-1220) having a weight average molecular weight of about 2000 mol/g were fed into a reactor, and about 500 ppm of a tin-based catalyst was added thereto, followed by stirring at about 85°C for about 1 hour. Next, 2 mol parts of (meth)acrylate having a hydroxyl group was added thereto, and stirred at about 85°C for about 1 hour, thereby preparing ether-based urethane acrylate. The weight average molecular weight of the ether-based urethane acrylate was about 12000 g/mol.

Urethane acrylate #2

About 4 mol parts of toluene diisocyanate and about 6 mol parts of polyester polyol with a weight average molecular weight of about 2000 mol/g (Union Chemical Co., U-1220) were fed into a reactor, about 500 ppm of a tin-based catalyst was added thereto, and the reactor was stirred at about 85°C for about 1 hour. Next, 2 mol parts of (meth)acrylate having a hydroxyl group were added, and the reactor was stirred at about 85°C for about 1 hour, thereby preparing ether-based urethane acrylate. The weight average molecular weight of the ether-based urethane acrylate was about 10000 g/mol.

Epoxy acrylate #1

4 mol parts of glycerol diglycidyl ether (GDE) and 8 mol parts of 2-hydroxyethyl acrylate (2-HEA) were fed into a reactor, about 500 ppm of an amine-based catalyst was added thereto, and the reactor was stirred at about 100°C for about 1 hour, thereby preparing glycerol epoxy acrylate.

Epoxy acrylate #2

8 mol parts of glycerol diglycidyl ether (GDE) and 4 mol parts of 2-hydroxyethyl acrylate (2-HEA) were fed into a reactor, about 500 ppm of an amine-based catalyst was added thereto, and the reactor was stirred at about 100°C for about 1 hour, thereby preparing glycerol epoxy acrylate.

Multifunctional acrylate #1 : MIWON Co., Miramer M500
Multifunctional acrylate #2 : MIWON Co., Miramer M300
Monofunctional acrylate #1 : MIWON Co., Miramer M150
Monofunctional acrylate #2 : MIWON Co., Miramer M120
Photoinitiator : Ethyl(2,4,6-trimethylbenzoyl)phenyl phosphinate
Antioxidant : SHIN SEUNG HICHEM Co., Ltd., Antioxidant-MD1024
Thermally crosslinkable acrylates

[Chemical Formula 4]

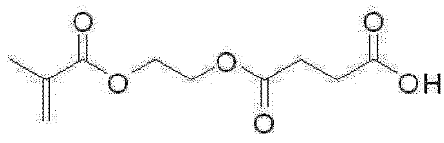

[Chemical Formula 5]

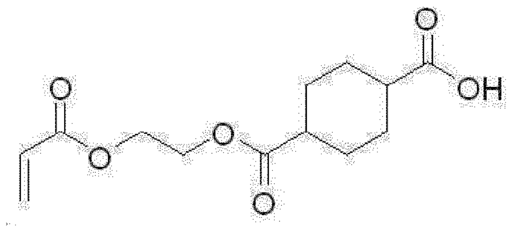

Manufacturing Example 1

Urethane acrylate #1 of about 10 parts by weight, about 15 parts by weight of Epoxy acrylate #1, about 5 parts by weight of Multifunctional acrylate #1, about 5 parts by weight of Monofunctional acrylate #1, about 3 parts by weight of acrylate (Chemical Formula 4) containing a carboxyl group, about 1 part by weight of a photoinitiator, about 15 parts by weight of lithium salt, about 50 parts by weight of acetamide and about 1 part by weight of an antioxidant were added to prepare an electrolyte composition.

Manufacturing Examples 2 to 4

The composition of an electrolyte composition was varied as shown in Table 1 below. The remaining process was carried out with reference to Manufacturing Example 1.

[Table 1]

| Classification | Urethan e acrylate #1 (parts by weight) | Epoxy acrylat e #1 (parts by weight ) | Monofunction al acrylate #1 (parts by weight) | Multifunction al acrylate #1 (parts by weight) | Thermally crosslinkable acrylate Chemical Formula 4 (parts by weight) | Solvent (parts by weight ) | Lithium salt (parts by weight ) |
|---|---|---|---|---|---|---|---|
| Manufacturing Example 1 | 10 | 15 | 5 | 5 | 3 | AA, 50 | 15 |
| Manufacturing Example 2 | 10 | 15 | 5 | 5 | 3 | AN, 50 | 15 |
| Manufacturing Example 3 | 15 | 10 | 3 | 5 | 5 | SF, 50 | 15 |
| Manufacturing Example 4 | 15 | 10 | 5 | 5 | 2 | AA, 50 | 15 |

Manufacturing Example 5

About 10 parts by weight of Urethane acrylate #2, about 15 parts by weight of Epoxy acrylate #2, about 6 parts by weight of Multifunctional acrylate #2, about 5 parts by weight of Monofunctional acrylate #2, about 2 parts by weight of acrylate (Chemical Formula 5) containing a carboxyl group, about 1 part by weight of a photoinitiator, about 15 parts by weight of lithium salt, about 50 parts by weight of acetamide and about 1 part by weight of an antioxidant were added to

prepare an electrolyte composition.

Manufacturing Examples 6 to 8

The composition of an electrolyte composition was varied as shown in Table 2 below. The remaining process was carried out with reference to Manufacturing Example 5.

[Table 2]

| Classification | Urethan e acrylate #2 (parts by weight) | Epoxy acrylat e #2 (parts by weight) | Monofunction al acrylate #2 (parts by weight) | Multifunction al acrylate #2 (parts by weight) | Thermally crosslinkabl e acrylate Chemical Formula 5 (parts by weight) | Solven t (parts by weight ) | Lithiu m salt (parts by weight ) |
|---|---|---|---|---|---|---|---|
| Manufacturing Example 5 | 10 | 15 | 5 | 6 | 2 | AA, 50 | 15 |
| Manufacturing Example 6 | 10 | 15 | 5 | 7 | 1 | AN, 50 | 15 |
| Manufacturing Example 7 | 15 | 10 | 3 | 5 | 3 | SF, 50 | 15 |
| Manufacturing Example 8 | 15 | 10 | 5 | 6 | 1 | AA, 50 | 15 |

Example 1

About 10 parts by weight of tungsten oxide powder, about 1 part by weight of TEOS and about 90 parts by weight of ethanol are uniformly mixed to prepare a first discoloration material composition. The first discoloration material composition was coated to a thickness of about 40 μm on the first ITO film, and a sol-gel reaction was allowed to occur at about 110°C for about 5 minutes, thereby preparing a first discoloration layer. About 11 parts by weight of nickel oxide powder, about 1 part by weight of TEOS and about 89 parts by weight of ethanol were uniformly mixed to prepare a second discoloration material composition. The second discoloration material composition was coated to a thickness of about 50 μm on the second ITO film, and a sol-gel reaction was allowed to occur at about 120°C for about 5 minutes, thereby manufacturing a second discoloration layer containing a second discoloration layer. The electrolyte composition (Manufacturing Example 1) was coated to a thickness of about 100 μm on the first discoloration layer. Next, a protective polyethylene terephthalate film having a thickness of about 50 μm and containing a release layer was disposed on the coated electrolyte composition layer. Next, the coated electrolyte composition was dried at about 120°C for about 10 minutes and thermally crosslinked, thereby manufacturing a first laminate. Next, the first laminate and the second laminate were left at room temperature and 60% relative humidity for about 90 days.

Next, the first laminate and the second laminate were laminated, and the coated gel polymer electrolyte composition was cured with UV light. Next, the laminate was aged by leaving it at room temperature for about 14 hours. Accordingly, the electrochromic element according to an embodiment was fabricated.

Examples 2 to 4

As shown in Table 3 below, the electrolyte composition was used to form the electrolyte layer. In addition, the thermal crosslinking temperature and thermal crosslinking time were adjusted as shown in Table 2 below. The remaining process was referenced from Example 1.

[Table 3]

| Classification | Electrolyte composition | Drying temperature (°C) | Drying time (min) |
|---|---|---|---|
| Example 1 | Manufacturing Example 1 | 120 | 10 |
| Example 2 | Manufacturing Example 2 | 130 | 5 |
| Example 3 | Manufacturing Example 3 | 110 | 15 |

(continued)

| Classification | Electrolyte composition | Drying temperature (°C) | Drying time (min) |
|---|---|---|---|
| Example 4 | Manufacturing Example 4 | 100 | 20 |

Example 5

About 10 parts by weight of tungsten oxide powder, about 1 part by weight of TEOS and about 90 parts by weight of ethanol were uniformly mixed, thereby preparing a first discoloration material composition. The first discoloration material composition was coated to a thickness of about 40 μm on the first ITO film, and a sol-gel reaction was allowed to occur at about 110°C for about 5 minutes, thereby manufacturing a first discoloration layer. About 11 parts by weight of nickel oxide powder, about 1 part by weight of TEOS and about 89 parts by weight of ethanol were uniformly mixed, thereby preparing a second discoloration material composition. The second discoloration material composition was coated to a thickness of about 50 μm on the second ITO film, and a sol-gel reaction was allowed to occur at about 120°C for about 5 minutes, thereby manufacturing a second discoloration layer containing a second discoloration layer. The electrolyte composition (Manufacturing Example 5) was coated to a thickness of about 100 μm on the first discoloration layer. Next, the coated electrolyte composition was dried at about 120°C for about 10 minutes and thermally crosslinked, thereby manufacturing a first laminate.

Next, the first laminate and the second laminate were laminated, and the coated gel polymer electrolyte composition was cured with UV light. Next, the laminate was aged by leaving it at room temperature for about 14 hours. Accordingly, the electrochromic element according to an embodiment was fabricated.

Examples 6 to 8

The electrolyte composition was used to form the electrolyte layer, as shown in Table 4 below. In addition, the thermal crosslinking temperature and the thermal crosslinking time were adjusted as shown in Table 4 below. The remaining process was referenced from Example 5.

[Table 4]

| Classification | Electrolyte composition | Drying temperature (°C) | Drying time (min) |
|---|---|---|---|
| Example 5 | Manufacturing Example 5 | 120 | 10 |
| Example 6 | Manufacturing Example 6 | 130 | 7 |
| Example 7 | Manufacturing Example 7 | 110 | 15 |
| Example 8 | Manufacturing Example 8 | 100 | 15 |

Evaluation examples

1. Decrease in transmittance after 90 days

The first laminate manufactured in each of Examples and Comparative Example was cut to a size of about 1 m ×1 m in a state where the protective film was disposed, and left at room temperature and 60% relative humidity for about 90 days. For each of the first laminates manufactured in Comparative Examples and Comparative Example, an initial transmittance, and a transmittance after 90 days were measured. The transmittance of the first laminate was measured as a total light transmittance using a solar spectrum meter (EDTM Co., SS2450).

2. Haze increase after 90 days

For each of the first laminates manufactured in Comparative Examples and Comparative Example, an initial haze, and a haze after 90 days were measured. The haze of the first laminate was measured as total light transmittance using a solar spectrum meter (EDTM Co., SS2450).

3. Transmittance deviation after 90 days

The first laminate manufactured in each of Examples and Comparative Example was cut to a size of about 1 m ×1 m in a state where the protective film was disposed, and left at room temperature and 60% relative humidity for about 90

days. Next, except for an edge portion with a width of about 3 cm in the first laminate, a transmittance was measured per a measurement region unit of about 10 cm × 10 cm of the first laminate, and the maximum transmittance, minimum transmittance and average transmittance in the measurement regions were obtained, so that the transmittance deviation was derived.

4. Driving range deviation

The first bus bar and the second bus bar were respectively mounted on the first transparent electrode and second transparent electrode of each of the electrochromic elements manufactured in Examples and Comparative Examples. Next, a driving voltage of about 1.5 V was applied to the first bus bar and the second bus bar for about 1.5 minutes, and the electrochromic elements were colored. Next, a driving voltage of about 1.5 V was applied for about 1.5 minutes in the opposite direction to the colored sample, and the sample was discolored. Here, a coloring transmittance and a discoloring transmittance were measured in each measurement region, and a driving range was measured by a difference between the coloring transmittance and the discoloring transmittance. Next, a maximum driving range, a minimum driving range, and an average driving range were derived from the measurement region, and the driving range difference was obtained by dividing a difference between the maximum driving range and the minimum driving range by the average driving range.

5. Haze

25 points in the first laminate, second laminate and electrochromic element manufactured in each of Examples and Comparative Example were subjected to haze measurement, and an average value, except for the maximum and minimum values, was derived. The haze was measured using a solar spectrum meter (EDTM Co., SS2450).

As shown in Table 5 below, the transmittance decrease, haze increase and transmittance deviation of the first laminate according each of Examples were measured, and the driving range deviations of the electrochromic elements according to Examples were measured.

[Table 5]

| Classification | Transmittance decrease (%) | Haze increase (%) | Transmittance deviation | Driving range deviation |
|---|---|---|---|---|
| Example 1 | 2 | 0.3 | 0.08 | 0.11 |
| Example 2 | 2.3 | 0.2 | 0.09 | 0.12 |
| Example 3 | 1.9 | 0.3 | 0.11 | 0.13 |
| Example 4 | 1.5 | 0.1 | 0.07 | 0.08 |

As shown in Table 5, the electrochromic elements according to Examples may suppress a transmittance decrease and a haze increase, and may reduce a transmittance deviation and a driving range deviation.

As shown in Table 6 below, the hazes of the first laminate, second laminate and electrochromic element according to each of Examples were measured.

[Table 6]

| Classification | First laminate haze (%) | Second laminate haze (%) | Electrochromic element haze (%) |
|---|---|---|---|
| Example 5 | 1.91 | 0.76 | 2.15 |
| Example 6 | 1.96 | 0.79 | 2.04 |
| Example 7 | 1.67 | 0.73 | 1.56 |
| Example 8 | 1.57 | 0.75 | 1.89 |

As shown in Table 6, the electrochromic elements according to Examples may have an improved haze decrease and a low haze.

## Claims

**1.** A method of fabricating an electrochromic element, the method comprising:

preparing a first laminate;
disposing a second laminate on the first laminate; and
laminating the first laminate and the second laminate,
wherein the first laminate comprises:

a first substrate;
a first transparent electrode disposed on the first substrate;
a first discoloration layer disposed on the first transparent electrode; and
an electrolyte composition layer that is disposed on the first discoloration layer and comprises a curable resin composition, a solvent and a metal salt,
wherein the second laminate comprises:

a second discoloration layer disposed on the electrolyte composition layer; and
a second substrate disposed on the second discoloration layer,
wherein, in the first laminate, a decrease in transmittance after 90 days measured by a measurement method below is 5% or less:

[Measurement method]
the transmittance decrease is a difference between an initial transmittance of the first laminate and a transmittance of the laminate after 90 days when a protective layer is disposed on the first laminate and is left at room temperature and a relative humidity of 60% for 90 days.

2. The method according to claim 1, wherein the laminating of the first laminate and the second laminate comprises curing the electrolyte composition layer.

3. The method according to claim 2, wherein the electrolyte composition layer is in an uncured or semi-cured state.

4. The method according to claim 3, wherein the first laminate is stored or transported for 60 days or more in a state where the protective layer is disposed on the electrolyte composition layer, and
the first laminate is laminated on the second laminate in a state where the protective layer is removed.

5. A laminate for laminating an electrochromic element, the laminate comprising:

a first substrate;
a first transparent electrode disposed on the first substrate;
a first discoloration layer disposed on the first transparent electrode; and
an electrolyte composition layer that is disposed on the first discoloration layer and comprises a curable resin composition, a solvent and a metal salt,
wherein a decrease in transmittance after 90 days measured by a measurement method below is 5% or less:

[Measurement method]
when the laminate is left at room temperature and a relative humidity of 60% for 90 days in a protective layer is disposed on the electrolyte composition layer, the transmittance decrease is a difference between an initial transmittance of the laminate and a transmittance of the laminate after 90 days.

6. The laminate according to claim 5, wherein a haze increases after 90 days measured by a measurement method below is less than 5%:

[Measurement method]
when the laminate is left at room temperature and 60% relative humidity for 90 days in a state where the protective layer is disposed on the electrolyte composition layer, the haze increase is a difference between a haze of the laminate after 90 days and an initial haze of the laminate.

7. The laminate according to claim 5, wherein a transmittance deviation after 90 days measured by a measurement method below is less than 0.2:

[Measurement Method]
in a state where the protective layer is disposed on the electrolyte composition layer, a transmittance in each of

measurement regions of the laminate is measured after the laminate is left at room temperature and 60% relative humidity for 90 days, and the transmittance deviation is a value obtained by dividing a difference between a maximum transmittance of the measurement regions and a minimum transmittance thereof by an average transmittance.

**8.** The laminate according to claim 5, wherein the electrolyte composition layer is in an uncured or semi-cured state.

**9.** The laminate according to claim 8, wherein the curable resin composition comprises a photo-curable polymer having a thermosetting functional group.

**10.** An electrochromic element, comprising:

a first laminate; and
a second laminate laminated on the first laminate,
wherein the first laminate comprises:

a first substrate;
a first transparent electrode disposed on the first substrate;
a first discoloration layer disposed on the first transparent electrode; and
an electrolyte layer disposed on the first discoloration layer,
the second laminate comprises:

a second discoloration layer disposed on the electrolyte layer;
a second transparent electrode disposed on the second discoloration layer; and
a second substrate disposed on the second transparent electrode,
the electrolyte layer comprises a curable resin composition, a solvent and a metal salt,
the second laminate is laminated on the electrolyte layer, and
in the first laminate, a decrease in transmittance after 90 days measured by a measurement method below is 5% or less:

[Measurement method]
when the first laminate is left at room temperature and a relative humidity of 60% for 90 days in a state where a protective layer is disposed on the electrolyte layer, the transmittance decrease is a difference between an initial transmittance of the first laminate and a transmittance of the first laminate after 90 days.

**11.** The electrochromic element according to claim 10, wherein a driving range deviation measured by a measurement method below is less than 0.2:

[Measurement method]
in measurement regions of the electrochromic element, a transmittance when discolored, and a transmittance when colored are measured, a driving range in the measurement regions is a difference between the transmittance when discolored and the transmittance when colored, and the driving range deviation is obtained by dividing a difference between a maximum driving range and minimum driving range in the measurement regions by an average driving range.

**12.** A window device, comprising:

a frame;
a window mounted on the frame; and
an electrochromic element disposed in the window,
wherein the electrochromic element comprises:

a first laminate; and
a second laminate laminated on the first laminate,
wherein the first laminate comprises:

a first substrate;

a first transparent electrode disposed on the first substrate;
a first discoloration layer disposed on the first transparent electrode; and
an electrolyte layer disposed on the first discoloration layer,
the second laminate comprises:

a second discoloration layer disposed on the electrolyte layer;
a second transparent electrode disposed on the second discoloration layer; and
a second substrate disposed on the second transparent electrode,
wherein the electrolyte layer comprises a curable resin composition, a solvent and a metal salt,
the second laminate is laminated on the electrolyte layer, and
in the first laminate, a decrease in transmittance after 90 days measured by a measurement method below is 5% or less:

[Measurement method]
when the first laminate is left at room temperature and a relative humidity of 60% for 90 days in a state where a protective layer is disposed on the electrolyte layer, the transmittance decrease is a difference between an initial transmittance of the first laminate and a transmittance of the first laminate after 90 days.

【FIG. 1】

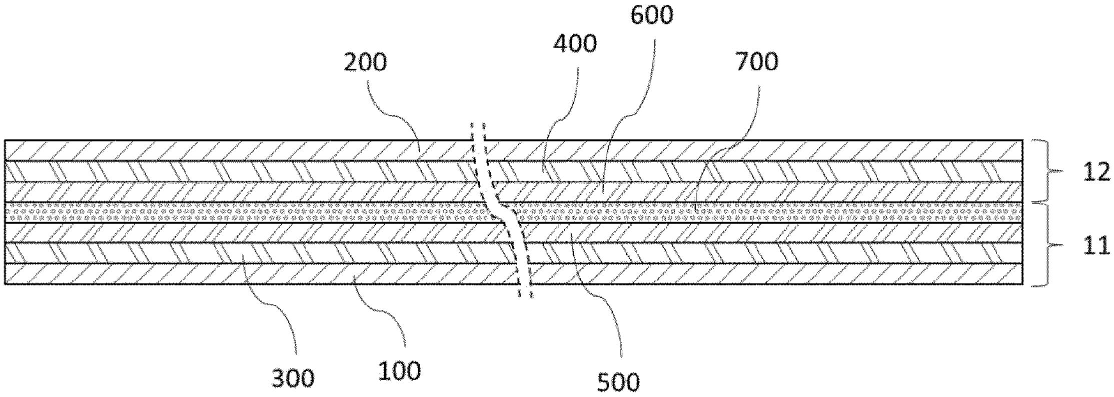


【FIG. 2】

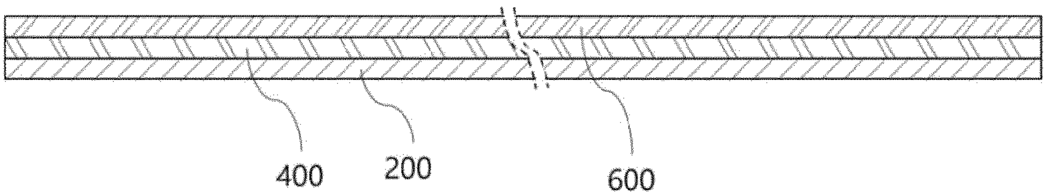


【FIG. 3】

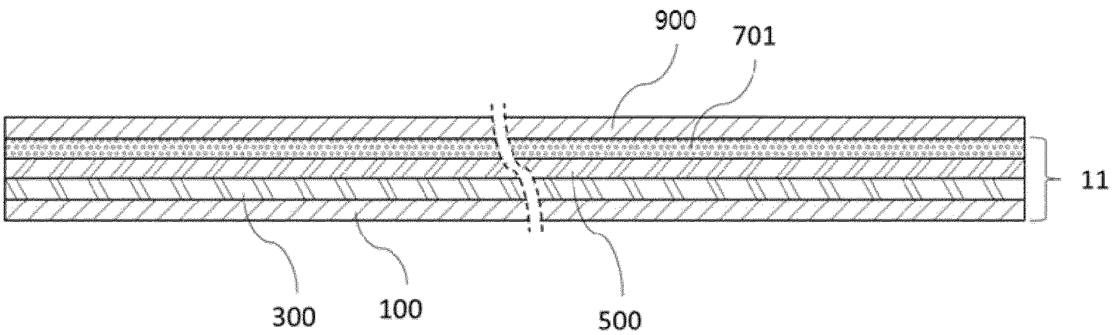

【FIG. 4】

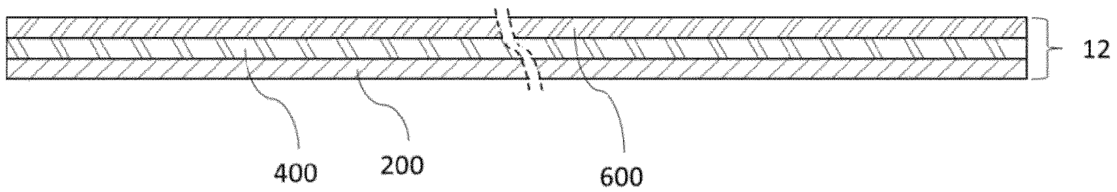


【FIG. 5】

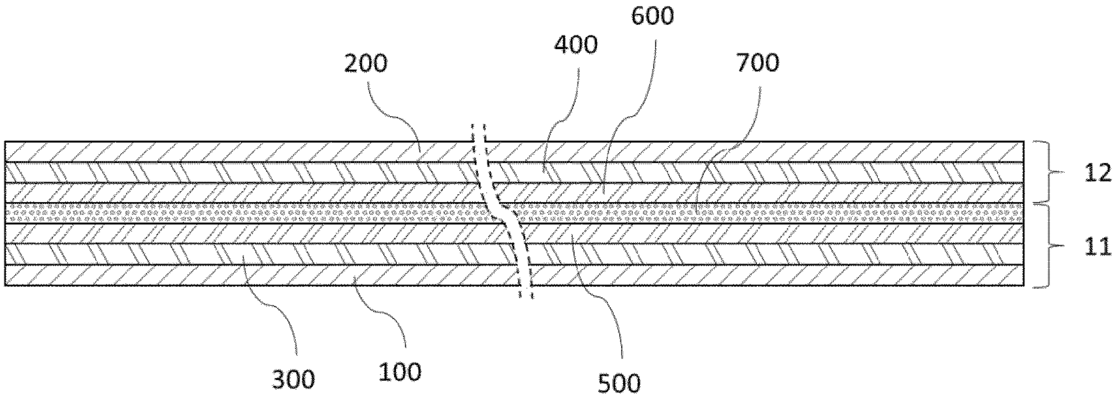


【FIG. 6】

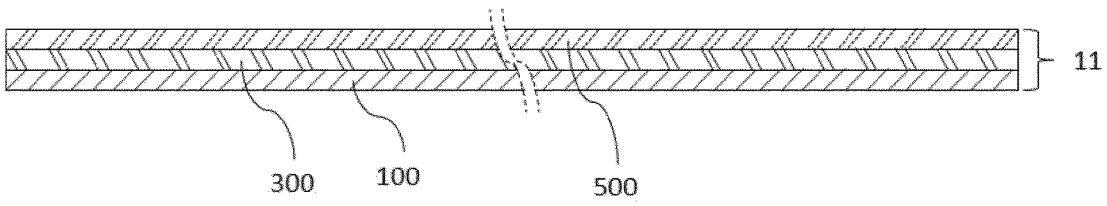


【FIG. 7】

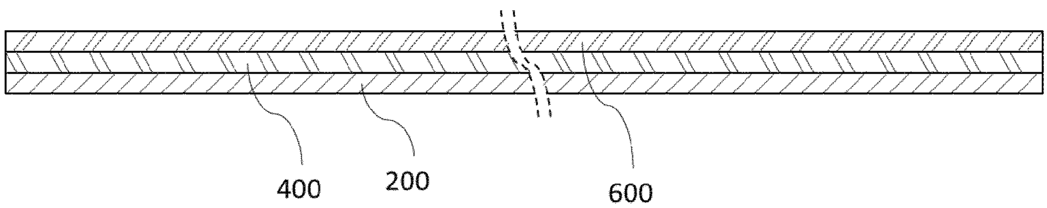

【FIG. 8】

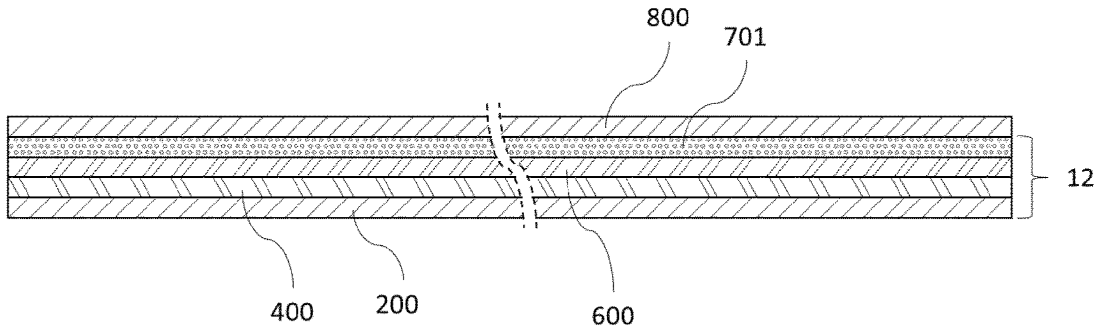


【FIG. 9】

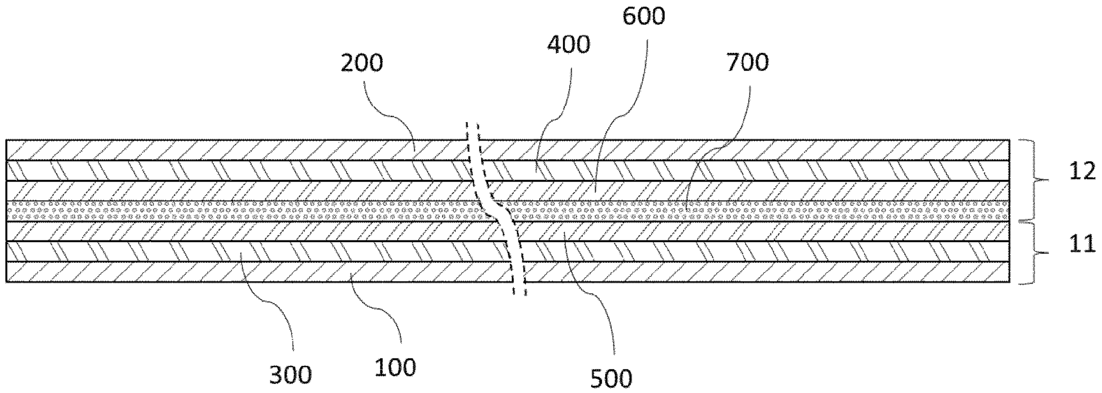


【FIG. 10】

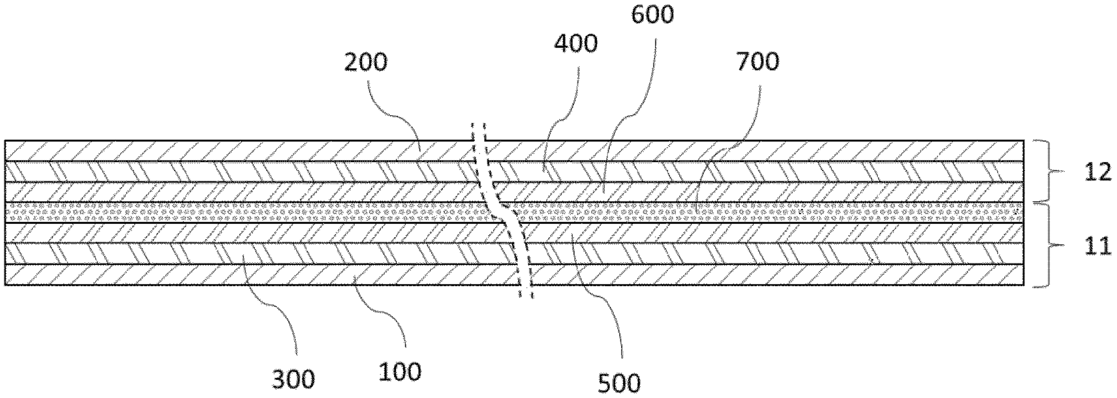

【FIG. 11】

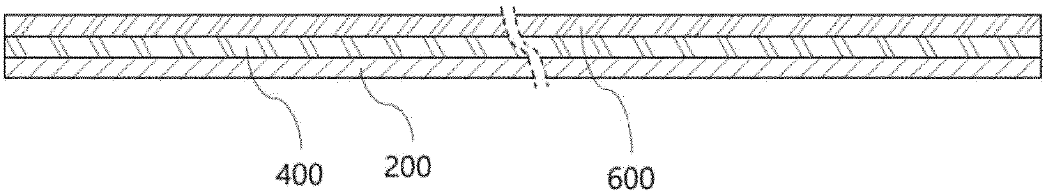


【FIG. 12】

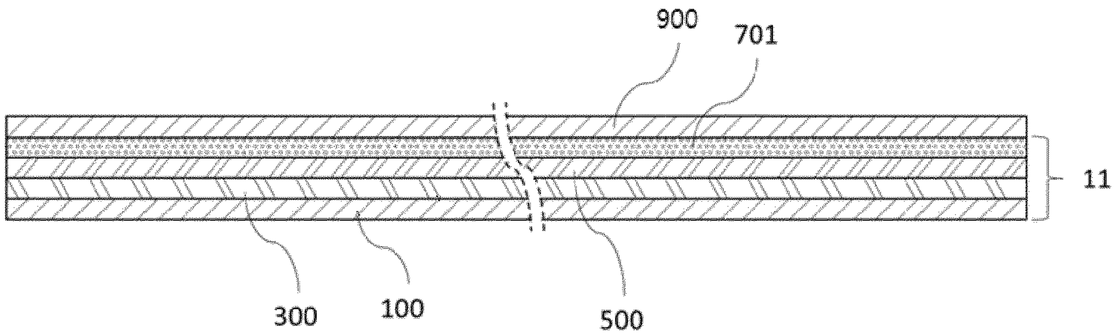


【FIG. 13】

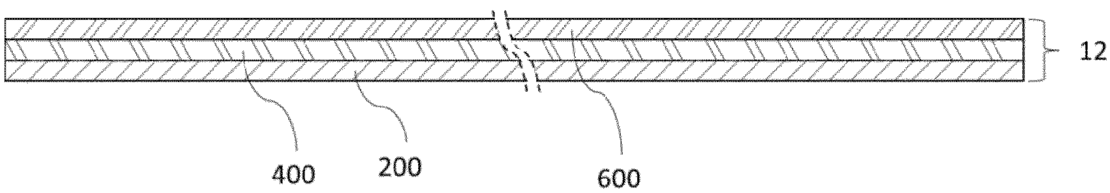


【FIG. 14】

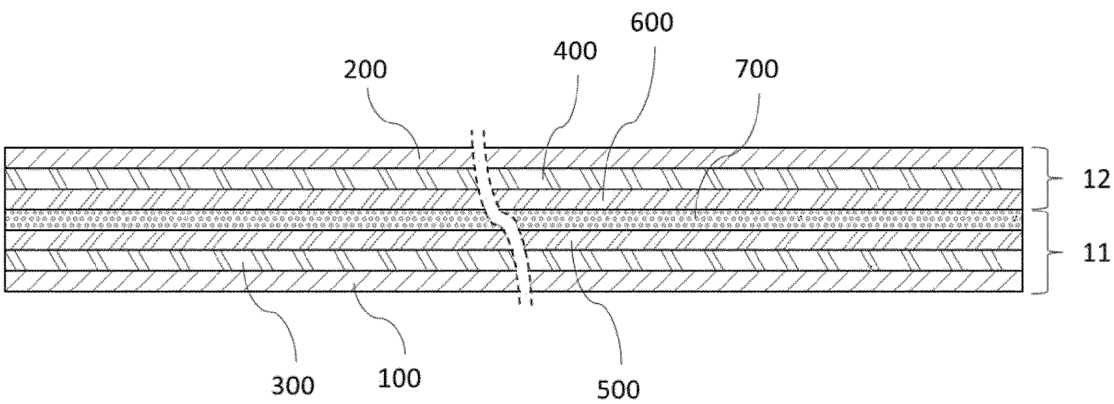

【FIG. 15】

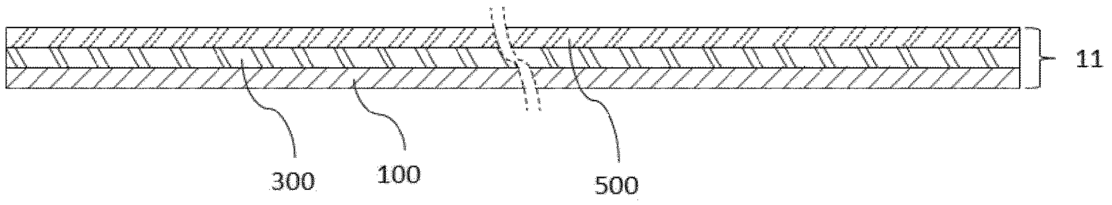


【FIG. 16】

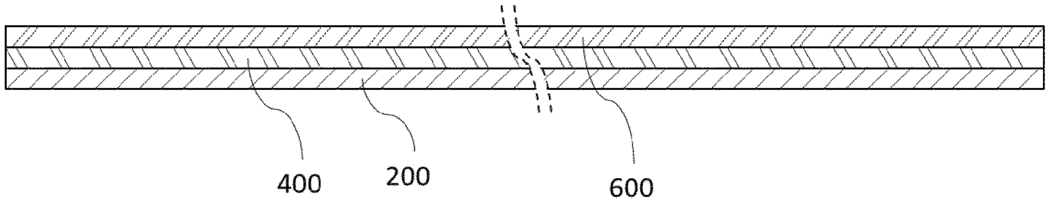


【FIG. 17】

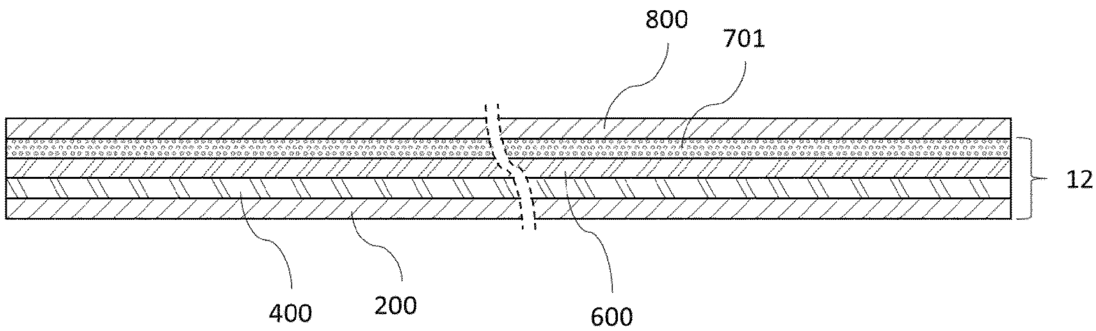


【FIG. 18】

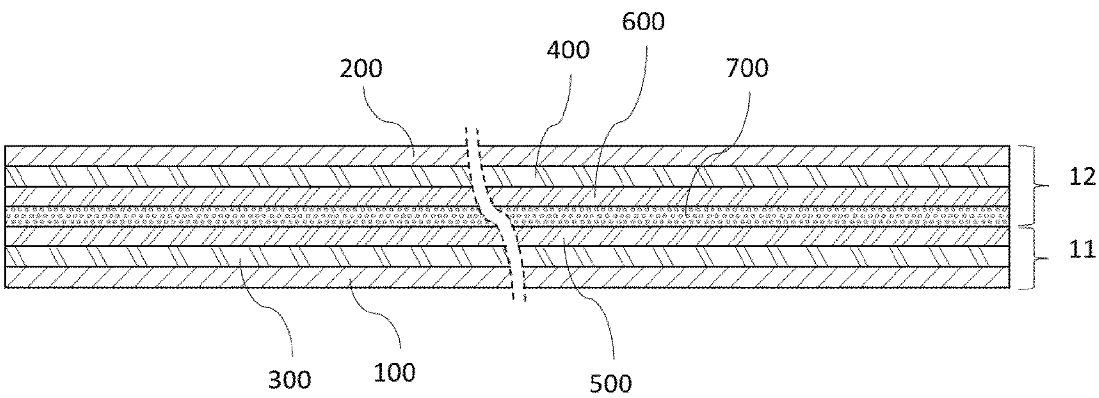

【FIG. 19】

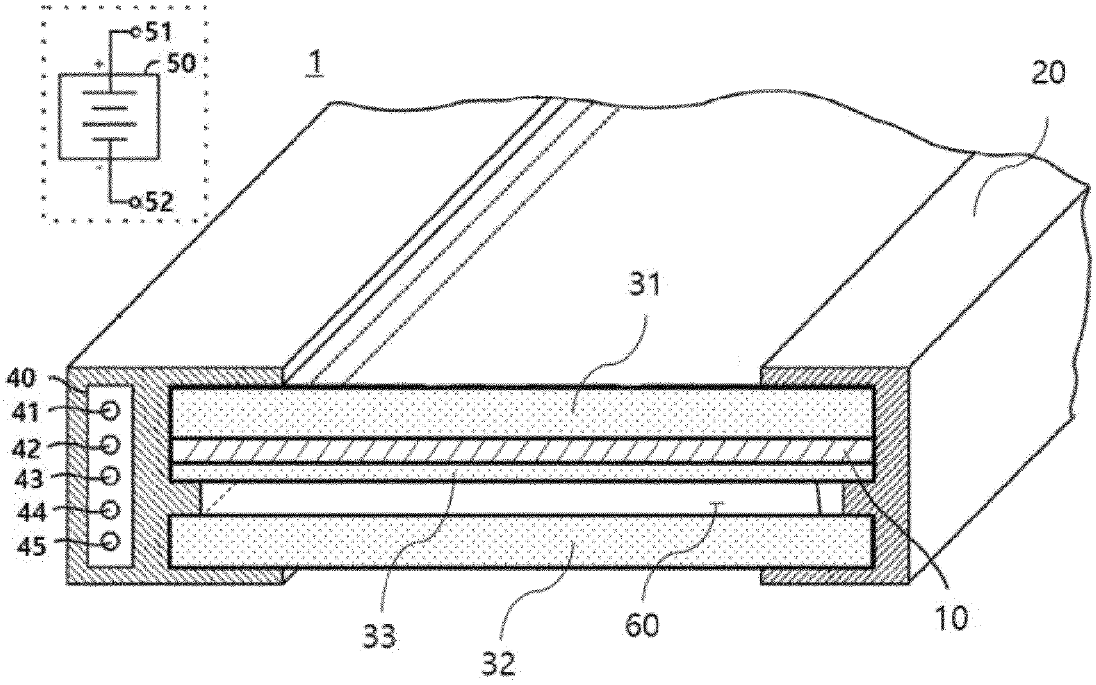

**INTERNATIONAL SEARCH REPORT**

International application No. **PCT/KR2023/011178**

**A. CLASSIFICATION OF SUBJECT MATTER**

**G02F 1/153**(2006.01)i; **G02F 1/155**(2006.01)i; **E06B 9/24**(2006.01)i; **B60J 3/04**(2006.01)i; **B32B 7/023**(2019.01)i; **B32B 37/00**(2006.01)i; **B60J 3/00**(2006.01)i; **G02F 1/15**(2006.01)i

According to International Patent Classification (IPC) or to both national classification and IPC

**B. FIELDS SEARCHED**

Minimum documentation searched (classification system followed by classification symbols)

G02F 1/153(2006.01); C08F 20/10(2006.01); C08K 3/10(2006.01); C08L 101/00(2006.01); G02B 1/10(2006.01); G02B 1/11(2006.01); G02F 1/155(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기변색(electrochromic), 전해질(electrolyte), 전극(electrode), 투과율(transmissivity), 경화(harden), 라미네이트(laminate), 금속염(metallic salts), 헤이즈(haze), 보호층(protective layer)

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2017-0040615 A (INDUSTRY ACADEMIC COOPERATION FOUNDATION OF YEUNGNAM UNIVERSITY) 13 April 2017 (2017-04-13)<br>See paragraphs [0034], [0036], [0043] and [0050]; and figure 1. | 1-5,8-10,12<br>6-7,11 |
| Y | KR 10-2013-0013943 A (DONGWOO FINE-CHEM CO., LTD.) 06 February 2013 (2013-02-06)<br>See paragraphs [0028]-[0029] and [0051]. | 1-5,8-10,12 |
| Y | JP 2008-146021 A (FUJIFILM CORP.) 26 June 2008 (2008-06-26)<br>See claim 1. | 1-5,8-10,12 |
| Y | KR 10-2021-0152888 A (SKC CO., LTD.) 16 December 2021 (2021-12-16)<br>See paragraphs [0131] and [0135]; and figure 6. | 4 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 November 2023** | **09 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2023/011178**

**C. DOCUMENTS CONSIDERED TO BE RELEVANT**

| Category* | Citation of document, with indication, where appropriate, of the relevant passages | Relevant to claim No. |
|---|---|---|
| A | KR 10-2017-0111939 A (LG CHEM, LTD.) 12 October 2017 (2017-10-12) See paragraphs [0011]-[0019], [0036] and [0044]. | 1-12 |

Form PCT/ISA/210 (second sheet) (July 2022)

**INTERNATIONAL SEARCH REPORT**
**Information on patent family members**

International application No.
**PCT/KR2023/011178**

| Patent document cited in search report | Publication date (day/month/year) | Patent family member(s) | Publication date (day/month/year) |
|---|---|---|---|
| KR 10-2017-0040615 A | 13 April 2017 | KR 10-1830873 B1 | 21 February 2018 |
| KR 10-2013-0013943 A | 06 February 2013 | KR 10-1781144 B1 | 25 September 2017 |
| JP 2008-146021 A | 26 June 2008 | CN 101221262 A | 16 July 2008 |
| | | CN 101221262 B | 27 July 2011 |
| | | US 2008-0069975 A1 | 20 March 2008 |
| KR 10-2021-0152888 A | 16 December 2021 | CN 113777844 A | 10 December 2021 |
| | | KR 10-2421041 B1 | 14 July 2022 |
| | | US 2021-0382342 A1 | 09 December 2021 |
| KR 10-2017-0111939 A | 12 October 2017 | KR 10-2167224 B1 | 19 October 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020010087586
- KR 0184841
- KR 1020160101297